(19) Europäisches Patentamt
European Patent Office
Office européen des brevets

(11) Veröffentlichungsnummer: **0 513 657 A2**

# (12) EUROPÄISCHE PATENTANMELDUNG

(21) Anmeldenummer: **92107669.1**

(51) Int. Cl.[5]: **C09B 62/44**

(22) Anmeldetag: **06.05.92**

(30) Priorität: **11.05.91 DE 4115470**
**27.01.92 DE 4202162**

(43) Veröffentlichungstag der Anmeldung:
**19.11.92 Patentblatt 92/47**

(84) Benannte Vertragsstaaten:
**CH DE FR GB IT LI**

(71) Anmelder: **HOECHST AKTIENGESELLSCHAFT**
**Postfach 80 03 20**
**W-6230 Frankfurt am Main 80(DE)**

(72) Erfinder: **Dannheim, Jörg, dr.**
**Strubbergstrasse 32**
**W-6000 frankfurt am Main(DE)**
Erfinder: **Russ, Werner Hubert, Dr.**
**Wingertstrasse 8a**
**W-6093 Flörsheim(DE)**

## (54) Wasserlösliche Azoverbindungen, Verfahren zu ihrer Herstellung und ihre Verwendung als Farbstoffe.

(57) Azoverbindungen der allgemeinen Formel D°-N=N-K°, in welcher D° ein Rest der allgemeinen Formel (2), (2a) oder (2b)

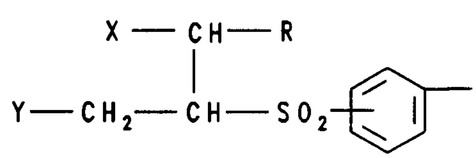

(2)

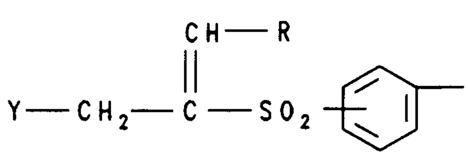

(2a)

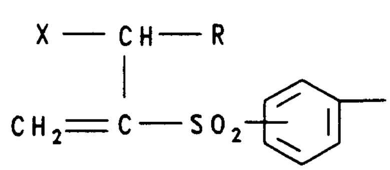

(2b)

ist, in welchen Y ein Substituent ist, der durch Alkali unter Bildung der Vinylgruppe eliminierbar ist, X Chlor oder Brom ist und R Wasserstoff, niederes Alkyl, Phenyl oder Halogen bedeutet, und
K° der Rest einer Kupplungskomponente oder ein anderer, in Azofarbstoffen üblicher azogruppenhaltiger Rest ist, wobei K° eine Gruppe der allgemeinen Formel -N(R°)-Z enthält, in welcher R° Wasserstoff oder niederes Alkyl bedeutet und Z ein Rest der allgemeinen Formel

EP 0 513 657 A2

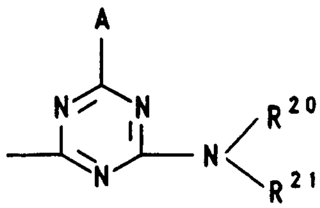

(3)

ist, in welcher A Halogen oder Cyanamido ist, $R^{20}$ Wasserstoff oder niederes Alkyl ist, das durch übliche Substituenten und/oder eine faserreaktive Gruppe der Vinylsulfonreihe substituiert sein kann, wobei außerdem dieser Alkylrest noch durch Sauerstoff- oder Aminogruppen unterbrochen sein kann, und $R^{21}$ eine der für $R^{20}$ genannten Bedeutungen besitzt oder ein gegebenenfalls durch Methyl substituierter Cycloalkylenrest ist oder einen Phenylrest bedeutet, der durch übliche Substituenten und/oder eine faserreaktive Gruppe der Vinylsulfonreihe substituiert sein kann, oder worin $R^{20}$ und $R^{21}$ zusammen mit dem Stickstoffatom und gegebenenfalls einer oder zwei weiteren Heterogruppen einen 5- oder 6-gliedrigen heterocyclischen Rest bilden können.
Die neuen Azoverbindungen eignen sich als faserreaktive Farbstoffe zum Färben von hydroxy- und/oder carbonamidgruppenhaltigem Material, insbesondere Fasermaterial, wie Cellulosefasern, Wolle und synthetische Polyamidfasern.

Es wurden neue wasserlösliche Azoverbindungen entsprechend der allgemeinen Formel (1)

D°—N=N—K°     (1)

gefunden, die wertvolle faserreaktive Farbstoffeigenschaften besitzen.
In dieser Formel (1) bedeuten:

D° ist ein Rest der allgemeinen Formel (2), (2a) oder (2b)

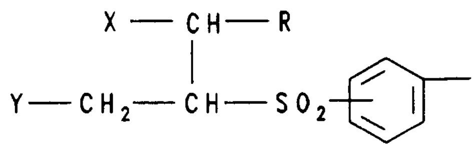

(2)

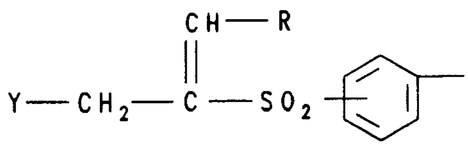

(2a)

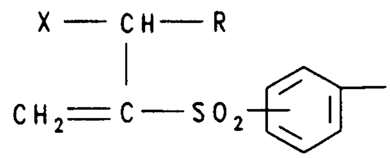

(2b)

in welchen

Y ein Substituent ist, der durch Alkali unter Bildung der Vinylgruppe eliminierbar ist, wobei die Sulfonylgruppe bevorzugt in meta- oder para-Stellung zur freien Bindung an den Benzolkern gebunden ist,

X Chlor oder Brom, bevorzugt Chlor, ist und

R Wasserstoff, Alkyl von 1 bis 4 C-Atomen, Phenyl oder Halogen, wie Chlor und Brom, bevorzugt jedoch Waserstoff, ist;

K° ist ein Rest der allgemeinen Formel (2A) oder (2B)

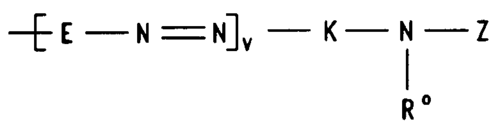

(2A)

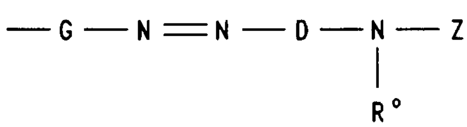

(2B)

in welchen

R° Wasserstoff oder Alkyl von 1 bis 4 C-Atomen, wie Ethyl und Methyl, bevorzugt Wasserstoff ist,

Z ein Rest der allgemeinen Formel (3)

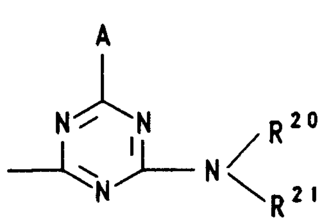

(3)

ist, in welcher

A Halogen oder Cyanamido ist, bevorzugt Chlor oder Fluor, insbesondere Fluor, ist,

$R^{20}$ Wasserstoff oder Alkyl von 1 bis 4 C-Atomen, wie Methyl oder Ethyl, ist, oder Alkyl von 1 bis 4 C-Atomen, wie beispielsweise Ethyl, bedeutet, das durch Sulfo, Carboxy, Sulfato, Phosphato, Hydroxy, Methoxy, Ethoxy, Phenyl, Monosulfophenyl oder Disulfophenyl substituiert ist, oder Alkyl von 1 bis 6 C-Atomen, bevorzugt von 2 bis 4 C-Atomen, insbesondere Ethyl oder n-Propyl, ist, das durch eine Gruppe der allgemeinen Formel $-SO_2-CH=CH_2$ oder $-SO_2-CH_2-CH_2-Y^1$ substituiert ist, in welcher $Y^1$ eine der oben für Y genannten Bedeutungen hat oder die Hydroxygruppe ist, oder Alkyl von 2 bis 8 C-Atomen ist, das durch 1 oder 2 Heterogruppen, die aus der Gruppe der Formeln -O-, -NH- und -N(R°)- mit R° der obengenannten Bedeutung ausgewählt sind, unterbrochen ist und durch eine Gruppe der allgemeinen Formel $-SO_2-CH=CH_2$ oder $-SO_2-CH_2-CH_2-Y^1$ mit $Y^1$ der obengenannten Bedeutung substituiert ist, und

$R^{21}$ Wasserstoff oder Alkyl von 1 bis 4 C-Atomen, wie Methyl oder Ethyl, ist oder Alkyl von 1 bis 4 C-Atomen, wie beispielsweise Ethyl, bedeutet, das durch Sulfo, Carboxy, Sulfato, Phosphato, Hydroxy, Methoxy, Ethoxy, Phenyl, Monosulfophenyl oder Disulfophenyl substituiert ist, oder ein Cycloalkylen von 5 oder 6 C-Atomen ist, das durch 1, 2 oder 3 Methylgruppen substituiert sein kann, oder ein Phenylrest ist, der durch Substituenten, bevorzugt 1 oder 2 Substituenten, aus der Gruppe Methyl, Ethyl, Methoxy, Ethoxy, Chlor, Sulfo und Carboxy oder durch 1 oder 2 dieser Substituenten und durch 1 oder 2 Gruppen der allgemeinen Formel $-SO_2-CH=CH_2$ und/oder $-SO_2-CH_2-CH_2-Y^1$ mit $Y^1$ der obengenannten Bedeutung oder durch 1 oder 2 Gruppen $-SO_2-CH=CH_2$ und/oder $-SO_2-CH_2-CH_2-Y^1$ substituiert sein kann, oder ein Alkylrest von 1 bis 6 C-Atomen, bevorzugt von 2 bis 4 C-Atomen, insbesondere Ethyl oder n-Propyl, ist, der durch eine Gruppe der Formel $-SO_2-CH=CH_2$ oder $-SO_2-CH_2-CH_2-Y^1$ mit $Y^1$ der obengenannten Bedeutung substituiert ist, oder Alkyl von 2 bis 8 C-Atomen ist, das durch 1 oder 2 Heterogruppen, die aus der Gruppe der Formeln -O-, -NH- und -N(R°)- mit R° der obengenannten Bedeutung ausgewählt sind, unterbrochen ist und durch eine Gruppe der allgemeinen Formel $-SO_2-CH=CH_2$ oder $-SO_2-CH_2-CH_2-Y^1$ mit $Y^1$ der obengenannten Bedeutung substituiert sein kann, oder

$R^{20}$ und $R^{21}$ zusammen mit dem N-Atom einen 5- oder 6-gliedrigen heterocyclischen Rest bilden, der eine oder zwei weitere Heterogruppen, wie eine Gruppe der Formeln -O-, -S-, -N= oder -NH- , enthalten kann, wie beispielsweise den N-Piperidino-, N-Piperazino- oder N-Morpholino-Rest,

E ein Rest der allgemeinen Formel (4a), (4b), (4c) oder (4d)

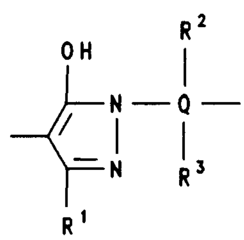

(4a)

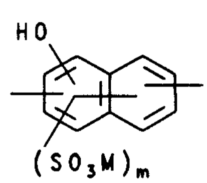

(4b)

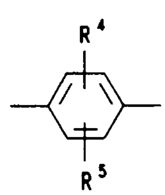

(4c)

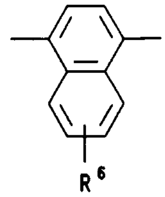

(4d)

ist, in welchen

$R^1$ Wasserstoff, Alkyl von 1 bis 4 C-Atomen, wie Methyl, Cyano, Carboxy, Carbalkoxy von 2

bis 5 C-Atomen, wie Carbomethoxy und Carbethoxy, Carbamoyl oder Phenyl ist, bevorzugt Methyl, Carboxy, Cyano, Carbomethoxy oder Carbethoxy ist,

Q ein Benzol- oder Naphthalinring ist,

$R^2$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Fluor, Brom, Chlor, Sulfo, Carboxy, Carbalkoxy von 2 bis 5 C-Atomen, wie Carbomethoxy und Carbethoxy, Trifluormethyl, Carbamoyl oder N-($C_1$-$C_4$-Alkyl)-carbamoyl, bevorzugt Wasserstoff, Methoxy, Ethoxy, Methyl oder Chlor, ist, falls Q einen Benzolring bedeutet, oder

$R^2$ Wasserstoff oder Sulfo ist, falls Q einen Naphthalinring bedeutet,

$R^3$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor oder Sulfo, bevorzugt Waserstoff, Methoxy, Ethoxy oder Methyl, ist, falls Q einen Benzolring bedeutet, oder Wasserstoff oder Sulfo ist, falls Q einen Naphthalinring bedeutet,

$R^4$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Brom, Chlor, Trifluormethyl, Sulfo, Carboxy oder Cyano, bevorzugt Wasserstoff, Methyl, Methoxy oder Sulfo, ist,

$R^5$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor, Amino, Alkylamino von 1 bis 4 C-Atomen, wie Ethylamino, Alkanoylamino von 2 bis 5 C-Atomen, wie Acetylamino und Propionylamino, Benzoylamino, Ureido, N'-Phenylureido, N'-($C_1$-$C_4$-Alkyl)-ureido, Phenylsulfonyl oder Alkylsulfonyl von 1 bis 4 C-Atomen, wie Ethylsulfonyl und Methylsulfonyl, und bevorzugt Acetylamino, Methyl, Ureido oder Wasserstoff ist,

$R^6$ Wasserstoff oder Sulfo ist,

M Wasserstoff oder ein Alkalimetall, wie Natrium, Kalium oder Lithium, ist,

m die Zahl 1 oder 2 bedeutet,

v die Zahl Null oder 1 ist und

-K-N(R°)- der bivalente Rest einer wasserlöslichen Kupplungskomponente ist, wie beispielsweise ein Rest der allgemeinen Formel (5a), (5b), (5c), (5d), (5e), (5f), (5g), (5h) oder (5i)

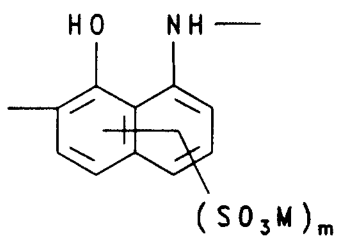

(5a)

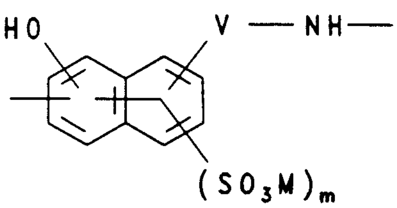

(5b)

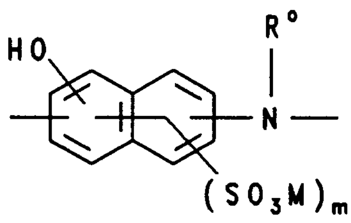

(5c)

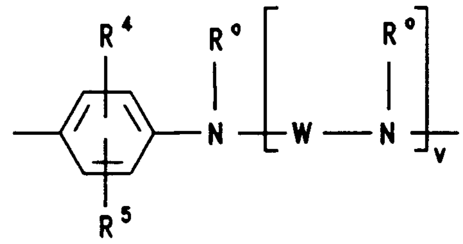

(5d)

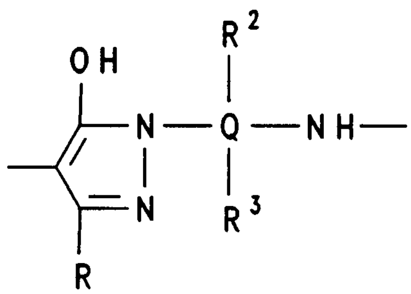

(5e)

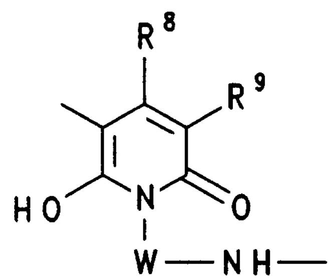

(5f)

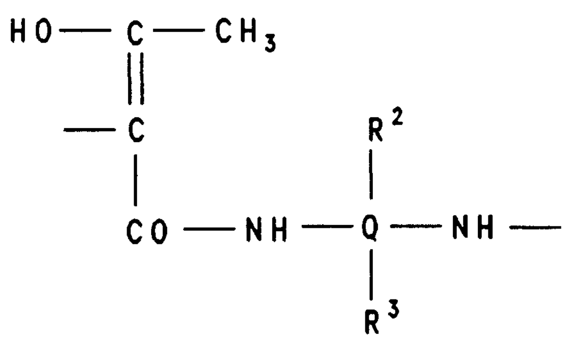

(5g)

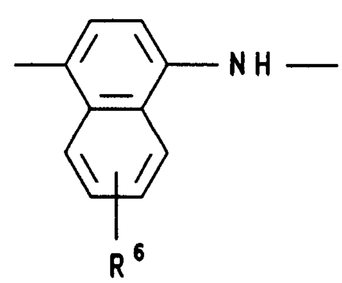

(5h)

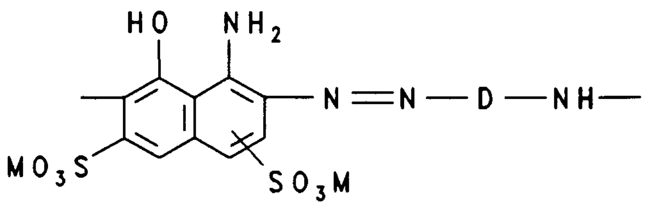

( 5 i )

ist, in welchen

M, m, Q, D, R, R°, $R^1$, $R^2$, $R^3$, $R^4$, $R^5$, $R^6$ und v eine der obengenannten Bedeutungen besitzen,

V eine direkte, kovalente Bindung oder ein Rest der Formel -NH-CO-phenylen, -NH-CO-NH-phenylen-, $-N(CH_3)$-CO-phenylen-, $-N(CH_3)$-CO-NH-phenylen-, $-N(C_2H_5)$-CO-phenylen-, $-N(C_2H_5)$-CO-NH-phenylen- oder -NH-phenylen- ist,

W ein Phenylenrest ist, der durch 1 oder 2 Substituenten aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Chlor, Carboxy und Sulfo substituiert sein kann, oder ein Alkylen von 1 bis 6 C-Atomen, bevorzugt von 1 bis 4 C-Atomen, wie beispielsweise Ethylen, ist oder ein Alkylen-phenylen mit einem Alkylen von 2 bis 4 C-Atomen ist, wie beispielsweise der Methylen-phenylen- oder Ethylen-phenylen-Rest ist,

$R^8$ Wasserstoff, Alkyl von 1 bis 4 C-Atomen, wie Methyl, Alkoxy von 1 bis 4 C-Atomen, wie Methoxy, Phenyl oder durch Cyano substituiertes Alkyl von 1 bis 4 C-Atomen ist und

$R^9$ Wasserstoff, Sulfo, Sulfoalkyl von 1 bis 4 C-Atomen, wie Sulfomethyl, Cyano oder Carbamoyl ist,

G ein 1-Amino-8-hydroxy-3,6- oder -4,6-disulfo-naphth-2,7-ylen-Rest oder ein 1,3-Phenylenrest ist, der durch eine Hydroxy- oder durch eine Aminogruppe substituiert ist und noch zusätzlich durch Sulfo, Alkyl von 1 bis 4 C-Atomen, wie Methyl und Ethyl, Hydroxy und/oder Amino substituiert sein kann, oder ein 1,8-Dihydroxy-3,6- oder -4,6-disulfo-naphth-2,7-ylen-Rest ist, und

D einen Rest der allgemeinen Formel (6)

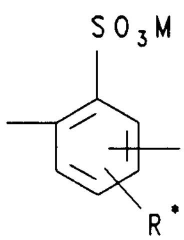

( 6 )

bedeutet, in welcher

M eine der obengenannten Bedeutungen hat und

R* Wasserstoff, Sulfo oder Alkyl von 1 bis 4 C-Atomen, wie Ethyl und insbesondere Methyl, ist.

Die einzelnen Formelglieder, auch die gegebenenfalls in ein und derselben Formel zweifach auftretenden Formelglieder, können zueinander gleiche oder voneinander verschiedene Bedeutungen besitzen.

Alkalisch eliminierbare Substituenten Y und $Y^1$ sind beispielsweise Halogen, wie Brom und Chlor, Cyano, Trialkylammonium mit Alkyl von jeweils 1 bis 4 C-Atomen, wie Trimethylammonium und Triethylammonium, Estergruppen organischer Carbon- und Sulfonsäuren, wie Alkanoyloxy von 2 bis 5 C-Atomen, hiervon beispielsweise Acetyloxy, oder Sulfobenzoyloxy, Benzoyloxy, Phenylsulfonyloxy und Toluylsulfonyloxy, Phosphato, Sulfato und Thiosulfato. Bevorzugt ist Y Sulfato und insbesondere Chlor, und bevorzugt ist $Y^1$ Chlor oder Sulfato.

Bevorzugt ist $R^{20}$ gleich Wasserstoff, Alkyl von 1 bis 4 C-Atomen, das durch Sulfo, Carboxy, Sulfato

oder Hydroxy substituiert sein kann, oder ist Ethyl, n-Propyl, β-Ethoxy-ethyl, γ-Ethoxy-propyl, β-Propoxy-ethyl oder γ-Propoxy-propyl, die durch Vinylsulfonyl, β-Sulfatoethylsulfonyl oder β-Chlorethylsulfonyl substituiert sind, und bevorzugt hat $R^{21}$ eine der für $R^{20}$ genannten Bedeutungen, bevorzugt die gleiche Bedeutung, oder ist Cyclohexyl, Phenyl oder Phenyl, das durch eine oder zwei Substituenten aus der Gruppe Chlor, Sulfo, Carboxy, Methyl, Methoxy, Ethyl und Ethoxy und/oder durch eine Gruppe der Formel $-SO_2-CH_2-CH_2-Y^1$ mit $Y^1$ der obengenannten, insbesondere bevorzugten Bedeutung, substituiert ist.

Bevorzugt ist G der 1-Amino-8-hydroxy-4,6-disulfo-naphth-2,7-ylen-Rest und insbesondere bevorzugt der 1-Amino-8-hydroxy-3,6-disulfo-naphth-2,7-ylen-Rest.

Der Formelrest E ist als der Rest einer kupplungsfähigen und diazotierbaren Verbindung entsprechend der allgemeinen Formel $H-E-NH_2$ aufzufassen.

In den Formeln (4b), (5b) und (5c) stehen jeweils die Hydroxygruppe und die freie Bindung im selben aromatischen Kern in ortho-Stellung zueinander. Bevorzugt steht die Hydroxygruppe in α-Stellung an den Naphthalinrest gebunden.

Alkylgruppen von 1 bis 4 C-Atomen sind bevorzugt die Ethyl- und insbesondere die Methylgruppe; Alkoxygruppen von 1 bis 4 C-Atomen sind bevorzugt die Ethoxy- und und insbesondere die Methoxygruppe; Alkanoylaminogruppen von 2 bis 5 C-Atomen sind bevorzugt die Propionylaminogruppe und insbesondere die Acetylaminogruppe und Carbalkoxygruppen von 2 bis 5 C-Atomen sind bevorzugt die Carbomethoxy- und Carbethoxygruppe.

Die vorstehend oder nachfolgend bezeichneten Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen Gruppen entsprechend der allgemeinen Formel $-OSO_3M$ , jeweils mit M der obengenannten Bedeutung.

Bevorzugte Azoverbindungen der allgemeinen Formel (1) mit dem Rest K° gleich der allgemeinen Formel (2A) sind insbesondere solche, in denen der Rest K° einen der Reste der allgemeinen Formeln (7a) bis (7h)

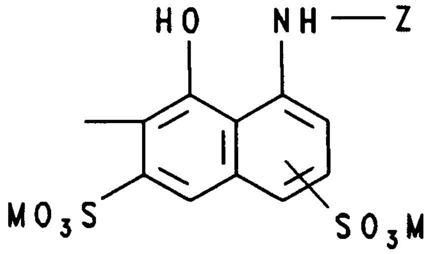

(7a)

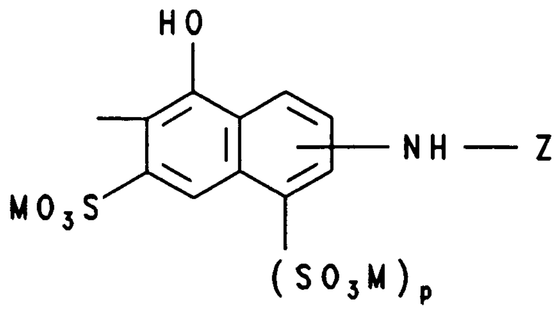

(7b)

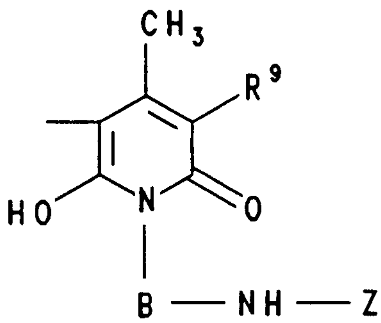

(7c)

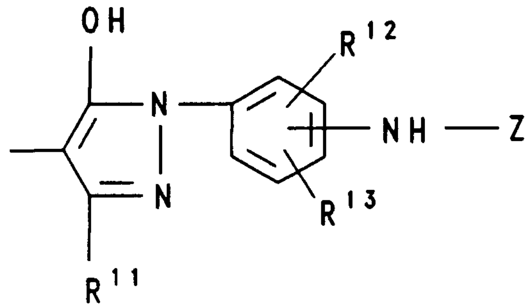

(7d)

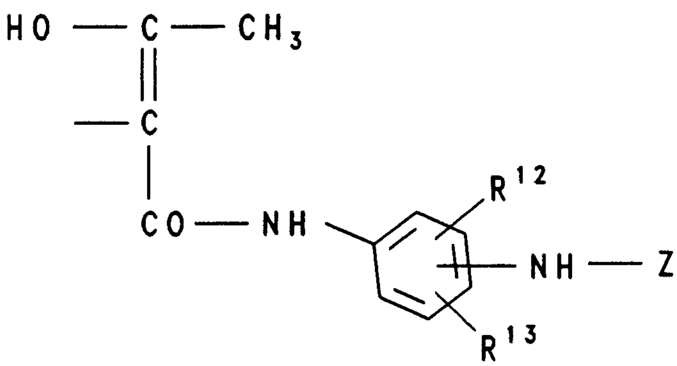

(7e)

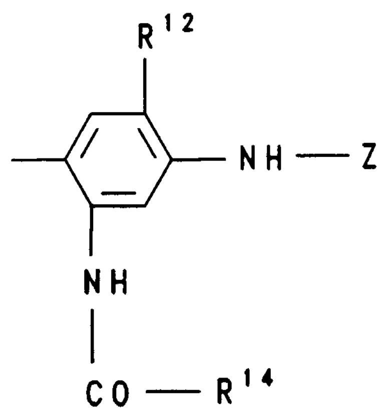

(7f)

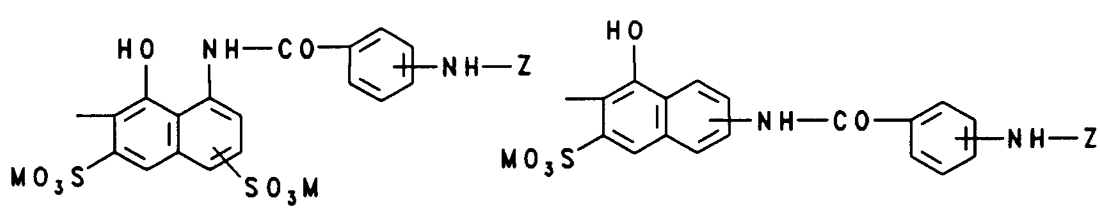

(7g)

(7h)

bedeutet, in welchen

| | |
|---|---|
| M, $R^9$ und Z | eine der obengenannten Bedeutungen, insbesondere bevorzugten Bedeutungen, besitzen, |
| p | die Zahl Null oder 1 ist (wobei im Falle p gleich Null diese Gruppe Wasserstoff bedeutet), |
| B | Alkylen von 2 bis 4 C-Atomen oder Phenylen ist, |
| $R^{11}$ | Carboxy, Methyl oder Carbethoxy ist, |
| $R^{12}$ | Wasserstoff, Methyl, Methoxy, Sulfo oder Chlor ist, |
| $R^{13}$ | Wasserstoff, Methyl oder Methoxy ist, |
| $R^{14}$ | Methyl oder Amino ist und |

die Aminogruppe in Formeln (7b) und (7h) sich in 2- oder 3-Stellung des 8-Naphtholrestes befindet.

Bevorzugt hiervon sind insbesondere Reste der allgemeinen Formeln (7a), (7b), (7d) und (7f).

Bevorzugte erfindungsgemäße Azoverbindungen sind solche, die sich aus den Kombinationen der Formelreste D° mit den Resten der Formeln (5a) bis (5i) und gegebenenfalls mit den Resten der Formeln (4a) bis (4d) unter Einbeziehung des Restes Z ergeben.

Insbesondere bevorzugt sind solche Azoverbindungen, die den allgemeinen Formeln (1A) bis (1J)

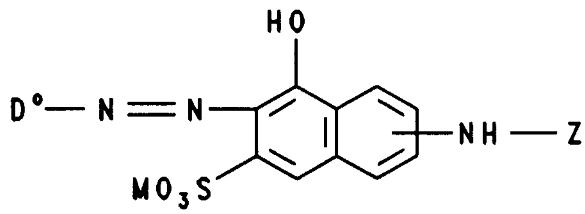

(1A)

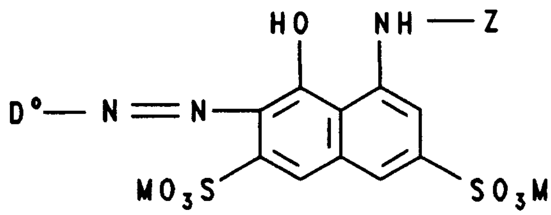

(1B)

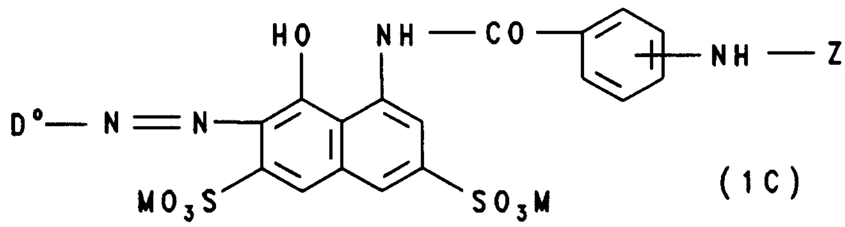

(1C)

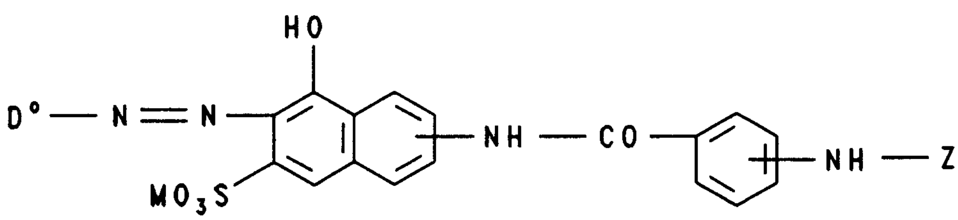

(1D)

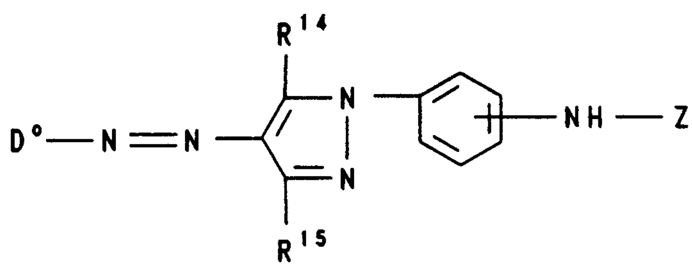

(1E)

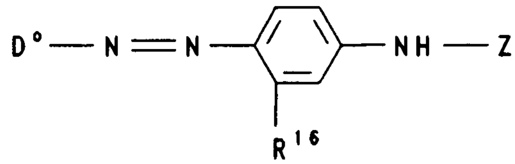

(1F)

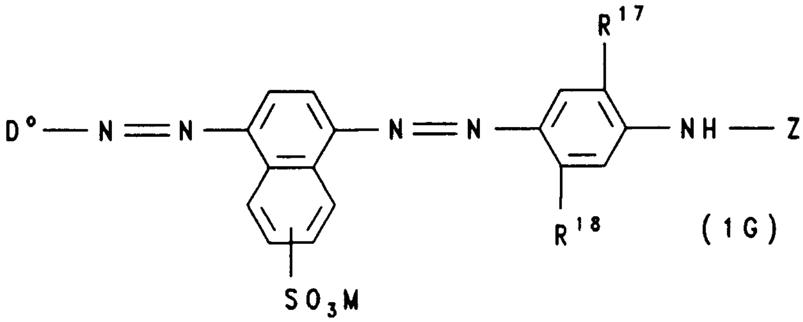

(1G)

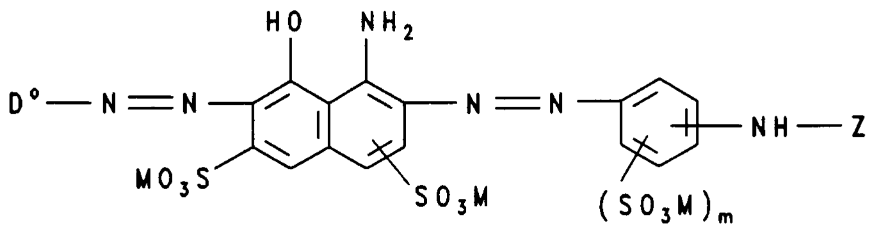

(1H)

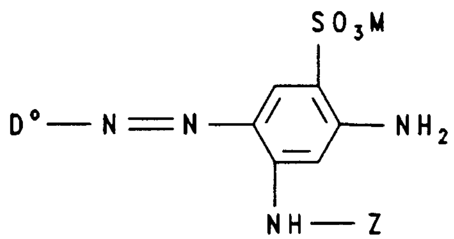

(1J)

entsprechen, in welchen

- D°, M und Z — eine der obengenannten, insbesondere bevorzugten Bedeutungen haben,
- $R^{14}$ — Hydroxy oder Amino, bevorzugt Hydroxy, ist,
- $R^{15}$ — Methyl, Carboxy, Carbomethoxy oder Carbethoxy, bevorzugt Methyl oder Carboxy, ist,
- $R^{16}$ — Acetylamino, Ureido oder Methyl ist,
- $R^{17}$ — Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy, Ethoxy oder Chlor, ist,
- $R^{18}$ — Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido, ist und

die Aminogruppierungen in Formeln (1A) und (1D) sich in 2- oder 3-Stellung des 8-Naphtholrestes befinden.

Die vorliegende Erfindung betrifft weiterhin Verfahren zur Herstellung der erfindungsgemäßen Azoverbindungen der allgemeinen Formel (1), die dadurch gekennzeichnet sind, daß man im Falle, daß K° einen Rest der allgemeinen Formel (2A) bedeutet, die Diazoniumverbindung eines Amins der allgemeinen Formel (8)

$$D^1-[N=N-E]_v-NH_2 \qquad (8)$$

in welcher E und v die obengenannten Bedeutungen haben,
$D^1$ ein Rest der allgemeinen Formeln (2c), (2d) oder (2e)

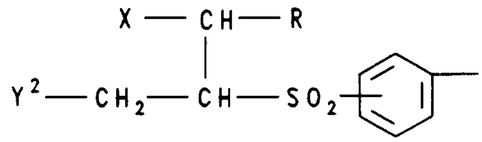

(2c)

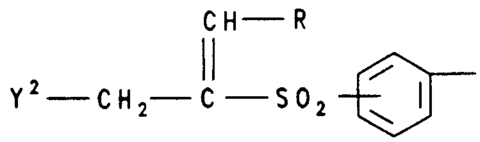

(2d)

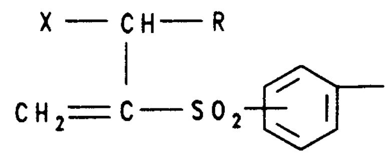

(2e)

ist, in welchen $Y^2$ eine der Bedeutungen von Y hat oder die Hydroxygruppe ist, hier bevorzugt Chlor, Brom, Acetyloxy oder Sulfato und insbesondere bevorzugt Chlor, Brom oder Acetyloxy ist, mit einer Verbindung der allgemeinen Formel H-K-N(R°)-Z mit K, R° und Z der obengenannten Bedeutung kuppelt, oder daß man eine Verbindung der allgemeinen Formel (9)

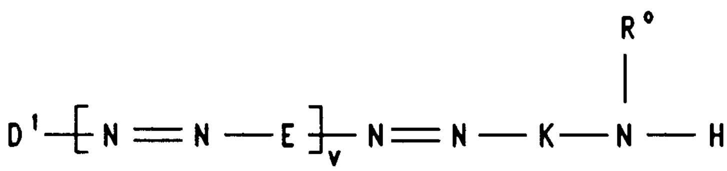

(9)

in welcher $D^1$, E, v, K und R° die obengenannten Bedeutungen haben, mit einer Verbindung der allgemeinen Formel Hal-Z, in welcher Hal Halogen, wie Chlor oder Fluor, ist und Z eine der obengenannten Bedeutungen besitzt, umsetzt, oder daß man eine Verbindung der allgemeinen Formel (10)

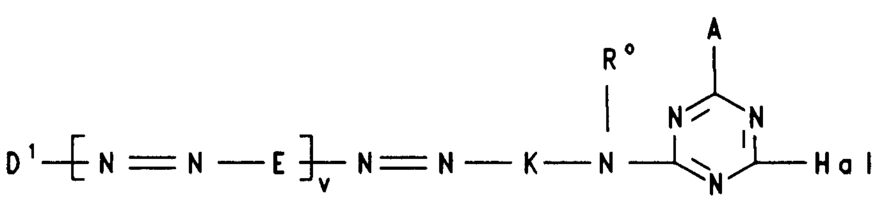

(10)

in welcher $D^1$, A, E, v, K, R° und Hal eine der obengenannten Bedeutungen besitzen, mit einer Verbindung der allgemeinen Formel $HNR^{20}R^{21}$ mit $R^{20}$ und $R^{21}$ der obengenannten Bedeutung in äquivalenten Mengen umsetzt,
und daß man im Falle von K° gleich einem Rest der allgemeinen Formel (2B) eine Verbindung der allgemeinen Formel (11)

$D^1—N=N—G^1$ (11)

in welcher $D^1$ die obengenannte Bedeutung besitzt und $G^1$ ein Aminophenyl- oder Hydroxyphenyl-Rest ist, die beide durch Sulfo, Alkyl von 1 bis 4 C-Atomen, Hydroxy und/oder Amino substituiert sein können, oder der 1,8-Dihydroxy-3,6- oder -4,6-disulfo-naphth-2-yl- oder -naphth-7-yl-Rest oder der 1-Amino-8-hydroxy-3,6- oder -4,6-disulfo-naphth-2-yl-Rest ist, mit der Diazoniumverbindung eines Amins der allgemeinen Formel (12)

$H_2N-D-N(R°)-Z$ (12)

in welcher D, R° und Z eine der obengenannten Bedeutungen haben, kuppelt, oder daß man eine Verbindung der allgemeinen Formel (13)

$D^1-N=N-G-N=N-D-N(R°)-H$ (13)

ist, in welcher $D^1$, D, G und R° eine der obengenannten Bedeutungen haben, mit einer Verbindung der allgemeinen Formel Hal-Z mit Hal und Z der obengenannten Bedeutung umsetzt, oder daß man eine Verbindung der allgemeinen Formel (14)

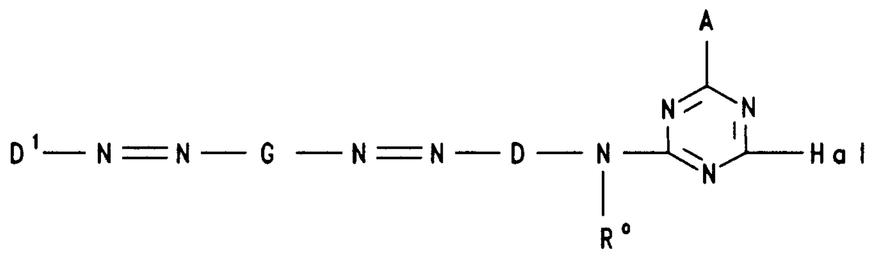

(14)

in welcher $D^1$, D, A, G und R° die obengenannten Bedeutungen haben und Hal wie oben definiert ist, mit einer Verbindung der allgemeinen Formel $HNR^{20}R^{21}$ mit $R^{20}$ und $R^{21}$ der obengenannten Bedeutung in äquivalenten Mengen umsetzt,
wobei in den Fällen der Verwendung einer Verbindung der allgemeinen Formel (2c) oder (2d) mit $Y^2$ gleich einer Hydroxygruppe diese Hydroxygruppe in der gebildeten Azoverbindung in eine Gruppe Y der erfindungsgemäßen Azoverbindung der Formel (1), wie später noch angegeben, übergeführt wird.

Die Diazotierungs- und Kupplungsreaktionen des erfindungsgemäßen Verfahrens erfolgen in üblicher und altbekannter Weise, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 35°C in bevorzugt wäßrigem Medium.

Die Ausgangsverbindungen der allgemeinen Formel (8) mit v gleich 1 werden in bekannter Weise der Diazotierungs- und Kupplungsreaktion des Amins der Formel $D°-NH_2$ als Diazokomponente und der Verbindung der allgemeinen Formel $H-E-NH_2$ als Kupplungskomponente hergestellt. In gleicher Weise erfolgt die Synthese der Azoverbindungen der allgemeinen Formel (11) durch Kupplung des Diazoniumsalzes des Amins der Formel $D°-NH_2$ mit der Verbindung der allgemeinen Formel H-G-H , wie beispielsweise der 1-Amino-8-naphthol-3,6- oder - 4,6-disulfonsäure oder einem Anilin, analog bekannter Verfahrensweisen im stark sauren Medium, oder falls G ein Hydroxyphenylen-Rest ist, im neutralen bis schwach alkalischen Medium.

Die Ausgangsverbindungen entsprechend der allgemeinen Formel $D-NH_2$, der allgemeinen Formel $H-K-NH_2$, der allgemeinen Formel $H-E-NH_2$ und der allgemeinen Formel $HNR^{20}R^{21}$ sind bekannt und zahlreich in der Literatur beschrieben.

Die Kondensationsreaktion zwischen einer Amino-Ausgangsverbindung der allgemeinen Formel (9) oder (13) und einer Verbindung der allgemeinen Formel Hal-Z erfolgt in üblicher Weise der Umsetzung einer Aminoverbindung mit einem ein reaktives Halogenatom enthaltenden Triazinrest, so in wäßrig-organischem Medium, insbesondere bevorzugt in wäßrigem Medium, und bevorzugt in Anwesenheit eines Dispergiermittels unter Zusatz eines säurebindenden Mittels, wie eines Alkali- oder Erdalkalicarbonats, Alkali- oder Erdalkalihydrogencarbonats oder -hydroxids oder Alkaliacetats, wobei die Alkali- und Erdalkalimetalle vorzugsweise Natrium, Kalium oder Calcium sind. Säurebindende Mittel sind ebenso tertiäre Amine, wie beispielsweise Pyridin, Triethylamin oder Chinolin. Sofern diese Kondensationsreaktionen in organischem oder wäßrig-organischem Medium erfolgen, ist das (anteilige) organische Lösemittel Aceton, Dioxan oder Dimethylformamid.

Die Kondensationsreaktionen zwischen diesen Aminoverbindungen und der Verbindung Hal-Z erfolgen in der Regel bei einer Temperatur zwischen 20°C und 80°C, vorzugsweise zwischen 30°C und 60°C, sowie bei einem pH-Wert zwischen 2 und 5, bevorzugt zwischen 2,5 und 4. Insbesondere erfolgt die

Umsetzung mit einer Verbindung Hal-Z mit Hal und A jeweils gleich einem Fluoratom bevorzugt bei einem pH-Wert zwischen 4 und 5 und bei einer Temperatur zwischen 5 °C und 20 °C und mit einer Verbindung Hal-Z mit Hal und A jeweils gleich einem Chloratom bevorzugt bei einem pH-Wert zwischen 2 und 4 und bei einer Temperatur zwischen 0 °C und 40 °C. Die Umsetzungen einer Amino-Ausgangsverbindung der allgemeinen Formel (9) oder (13) mit einer Verbindung der allgemeinen Formel (15)

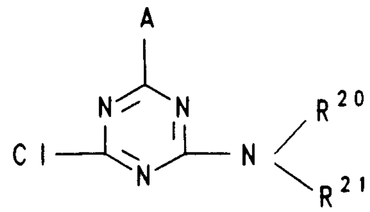

(15)

in welcher $R^{20}$ und $R^{21}$ eine der obengenannten Bedeutungen besitzen und A für die Cyanamidogruppe steht, erfolgen bevorzugt bei einer Temperatur zwischen 40 °C und 80 °C und bei einem pH-Wert zwischen 2 und 4.

Die Kondensationsreaktionen zwischen einer Verbindung entsprechend den allgemeinen Formeln (10) oder (14) und einer Aminoverbindung der allgemeinen Formel $HNR^{20}R^{21}$ obengenannter Bedeutung erfolgen ebenso analog bekannten Verfahrensweisen solcher Halogen-triazinylamino-Verbindungen mit Aminen, so auch in den oben angegebenen Reaktionsmedien unter Einsatz eines säurebindenden Mittels. In der Regel erfolgt die Umsetzung bei einer Temperatur zwischen 10 und 60 °C, vorzugsweise zwischen 20 und 40 °C. Bevorzugt erfolgt die Umsetzung mit Ausgangsverbindungen, in welchen Hal und A beide ein Chloratom bedeuten, bei einer Temperatur zwischen 30 und 40 °C und einem pH-Wert zwischen 4,0 und 6,5, und mit Ausgangsverbindungen, in welchen Hal und A beide ein Fluoratom bedeuten, bei einer Temperatur zwischen 5 und 20 °C und einem pH-Wert zwischen 3 und 7. Ausgangsverbindungen der allgemeinen Formel (10) oder (14), in welchen Hal für ein Chloratom steht und A die Cyanamidogruppe ist, werden mit den Aminoverbindungen der allgemeinen Formel $HNR^{20}R^{21}$ bevorzugt bei einem pH-Wert zwischen 2 und 5 und bei einer Temperatur zwischen 40 und 80 °C umgesetzt. Die Umsetzungen der Verbindungen (10) oder (14), in welchen Hal für Fluoratom steht und A die Cyanamidogruppe ist, mit den Aminen $HNR^{20}R^{21}$ wird bevorzugt bei einer Temperatur zwischen 20 und 60 °C und bei einem pH-Wert zwischen 4 und 6 durchgeführt.

Alle diese Umsetzungsmöglichkeiten sind analog den in der Literatur bekannten oder dem Fachmann geläufigen Synthesemethoden.

Ausgangsverbindungen der allgemeinen Formel $H-E-NH_2$ sind beispielsweise Anilin, 3-Methyl-anilin, 3-Chlor-anilin, 2,5-Dimethyl-anilin, 2,5-Dimethoxy-anilin, 3-Methoxy-anilin, 3-Methyl-6-methoxy-anilin, 3-Ureido-anilin, 3-Acetylamino-6-methyl-anilin, 2-Amino-4-acetylamino-benzol-1-sulfonsäure, 1-Aminonaphthalin, 1-Aminonaphthalin-6- oder -7- oder -8-sulfonsäure, 3-Acetylamino-anilin, 2-Methyl-anilin, 2-Methoxy-anilin, 3-Benzoylamino-anilin, 2,3-Dimethyl-anilin, 3,5-Dimethyl-anilin, 2-Methoxy-5-acetylamino-anilin, 2-Chlor-6-methyl-anilin, 5-Chlor-2-methyl-anilin, 2,6-Dichlor-3-methyl-anilin und 2-Methoxy-5-methyl-anilin.

Kupplungskomponenten entsprechend der allgemeinen Formel H-K-NH-Z sind beispielsweise 1-(4',6'-Dichlor-1',3',5'-triazin-2'-yl)-amino-8-naphthol-4,6- oder -3,6-disulfonsäure, 2- oder 3-(4',6'-Dichlor-s-triazin-2'-yl)-amino-8-naphthol-6-sulfonsäure, 1-[2'-Fluor-4'-(4''-sulfophenylamino)-s-triazin-6'-yl]-amino-8-naphthol-6-sulfonsäure, 1-[2'-Fluor-4'-(β-sulfoethylamino)-s-triazin-6'-yl]-amino-8-naphthol-6-sulfonsäure, 2-[2'-Sulfo-5'-(4'',6''-dichlor-s-triazin-2''-yl)-amino-phenylazo]-1-amino-8-naphthol-3,6-disulfonsäure, 2-[2'-Sulfo-4'-(4'',6''-dichlor-s-triazin-2''-yl)-amino-phenylazo]-1-amino-8-naphthol-3,6-disulfonsäure, 1-[4'-(4'',6''-Dichlor-2-triazin-2''-yl)-amino]phenyl-3-methyl- oder -3-carboxy-5-pyrazolon und 4-Methyl-1-[β-(4',6'-dichlor-s-triazin-2'-yl)-amino-ethyl]-6-hydroxy-2-pyridon.

Ausgangsverbindungen der allgemeinen Formel $H-K-NH_2$ sind beispielsweise 1-(3'- oder 4'-Aminophenyl)-3-carboxy-5-pyrazolon, 1-(2'-Sulfo-5'-aminophenyl)-3-carboxy-5-pyrazolon, 1-(4'-Amino-2'-sulfo-phenyl)-3-methyl-5-pyrazolon, 1-(4'-Amino-2'-sulfo-phenyl)-3-carboxy-5-pyrazolon, 1-(4'-Amino-2'-sulfo-phenyl)-3-carbethoxy-5-pyrazolon, 1-(3'-Amino-6'-methyl-phenyl)-3-carboxy-5-pyrazolon, 1-(2'-Methoxy-5'-aminophenyl)-3-carboxy-5-pyrazolon, 1-(3'- oder 4'-Aminophenyl)-3-methyl-5-pyrazolon, 1-(6'-Amino-4',8-disulfo-naphth-2'-yl)-3-carboxy-5-pyrazolon, 1-Amino-3,6- oder -4,6-disulfo-8-naphthol, 2-Amino-6-sulfo-8-naphthol, 3-Amino-6-sulfo-8-naphthol, 1-Amino-4-sulfo-8-naphthol, 1-Amino-2,4-disulfo-8-naphthol, 2-Amino-4,6-disulfo-8-naphthol, 3-Amino-4,6-disulfo-8-naphthol, 3-Methyl-anilin, 3-Chlor-anilin, 2,5-Dimethyl-anilin, 2,5-Dimethoxy-anilin, Anilin, 3-Methoxy-anilin, 3-Methyl-6-methoxy-anilin, 3-Ureido-anilin, 3-Acetylamino-6-methyl-anilin, 2-Amino-4-acetylamino-benzol-1-sulfonsäure, 1-Aminonaphthalin, 1-Aminonaphthalin-6- oder -7- oder -8-sulfonsäure, 2-(Methylamino)-6-sulfo-8-naphthol, 1-Amino-3,6-disulfo-2-(phenylazo)-8-naphthol, 1-Amino-3,6-disulfo-2-(4'-sulfophenylazo)-8-naphthol, 1-Amino-3,6-disulfo-2-(2',5'-disulfo-phenylazo)-8-naphthol, 1,3-Diaminobenzol, 1-Amino-3-[N,N-di-(β-hydroxyethyl)-amino]-benzol, 1-Amino-3-[N,N-di-(β-sulfatoethyl)-amino]-benzol, 1-Amino-3-[N,N-di-(β-hydroxyethyl)-amino]-4-methoxy-benzol, 1-Amino-3-[N,N-di-(β-sulfatoethyl)-amino]-4-methoxy-benzol, 1-Amino-3-(sulfobenzylamino)-benzol, 1-Amino-3-(sulfobenzylamino)-4-chlor-benzol, 1-Amino-3-[N,N-di-(sulfobenzyl)-amino]-benzol, 1,3-Diaminobenzol-4-sulfonsäure, 1-Amino-2-methoxy-6-sulfo-naphthalin, 1-Amino-5,7-disulfo-naphthalin, 1-Amino-6-sulfo-8-naphthol, 1-Amino-2,4,6-trisulfo-8-naphthol, 3-Acetylamino-anilin, 2-Methyl-anilin, 2-Methoxy-anilin, 3-Benzoylamino-anilin, 2,3-Dimethyl-anilin, 3,5-Dimethylanilin, 2-Methoxy-5-acetylamino-anilin, 2-Chlor-6-methyl-anilin, 5-Chlor-2-methyl-anilin, 2,6-Dichlor-3-methylanilin und 2-Methoxy-5-methyl-anilin.

Verbindungen der allgemeinen Formel H-G-H , die als bivalente Kupplungskomponenten zur Herstellung der Disazoverbindungen der allgemeinen Formel (1) mit dem Rest der Formel (2B) dienen können, sind beispielsweise 1,3-Diaminobenzol, 1,3-Diaminobenzol-5-sulfonsäure, Resorcin, 1,8-Dihydroxy-naphthalin-3,6-disulfonsäure, 1-Amino-8-naphthol-3,6-disulfonsäure und 1-Amino-8-naphthol-4,6-disulfonsäure.

Aminoverbindungen der allgemeinen Formel $HNR^{20}R^{21}$, die zur Herstellung der erfindungsgemäßen Azoverbindungen dienen können, sind beispielsweise 3-Sulfo-anilin, 4-Sulfo-anilin, 2-Sulfo-anilin, 2,5-Disulfo-anilin, 4-Carboxy-anilin, 3-Carboxy-anilin, 2,6-Disulfo-4-methyl-anilin, 2-Aminonaphthalin-1-sulfonsäure, Taurin, N-Methyl-taurin, Diethanolamin, Morpholin, 3-Aminophenyl-phosphonsäure, Glycin, 4-(β-Sulfatoethylsulfonyl)-anilin, 3-(β-Sulfatoethylsulfonyl)-anilin, β-(β'-Sulfatoethylsulfonyl)-ethylamin und γ-(β'-Sulfatoethylsulfonyl)-propylamin.

Die erfindungsgemäß zur Synthese der erfindungsgemäßen Azoverbindungen (1) einsetzbaren Verbindungen entsprechend der allgemeinen Formel $D^1$-$NH_2$ mit $D^1$ gleich einem Rest der Formel (2c), (2d) oder (2e) sind bisher noch nicht bekannt. Sie lassen sich herstellen, indem man eine Verbindung der allgemeinen Formel (16)

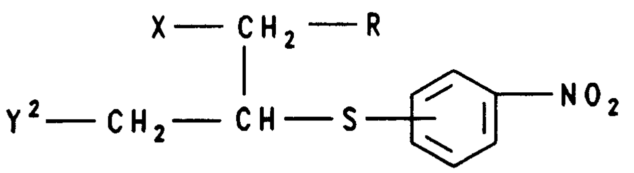
(16)

in welcher $Y^2$, X und R eine der obengenannten Bedeutungen haben, wobei $Y^2$ insbesondere bevorzugt Chlor, Brom, Alkanoyloxy von 2 bis 5 C-Atomen, wie Acetyloxy, oder Cyano ist, zur Sulfonylverbindung oxidiert, wobei als Oxidationsmittel beispielsweise Kaliumpermanganat, Natrium- oder Kaliumperhydrogensulfat, organische Persäuren, wie beispielsweise Peroxyessigsäure, Natriumperoxid, Wasserstoffperoxid und Chlor in wäßriger Lösung verwendet werden. Die Oxidationsreaktion kann bei einer Temperatur zwischen 10 und 100 °C, bevorzugt zwischen 50 und 90 °C, erfolgen. Bevorzugt führt man die Oxidation einer Verbindung der allgemeinen Formel (16) zur entsprechenden Sulfonylverbindung der nachstehend angegebenen allgemeinen Formel (17) in wäßrig-organischem oder in rein organischem Medium durch, wobei als organisches Lösemittel solche eingesetzt werden, die in Wasser löslich und mit Wasser mischbar und gegenüber den Oxidationsmitteln inert sind. Solche organischen Lösemittel sind beispielsweise Eisessig und Dioxan. Vorzugsweise verwendet man Eisessig, insbesondere in Mischung mit Wasser. Beispielsweise kann man die Oxidationsreaktion mittels Wasserstoffperoxid in wasserfreier Essigsäure oder in wasserhaltiger Essigsäure mit einem Wassergehalt von bis zu 20 Gew.-% bei einer Temperatur zwischen 30 und 100 °C, bevorzugt zwischen 60 und 90 °C, durchführen. Der Gehalt an Wasserstoffperoxid beträgt in der Regel zwischen 10 und 35 Gew.-%, bevorzugt zwischen 20 und 35 Gew.-%.

Die so erhältlichen Verbindungen der allgemeinen Formel (17)

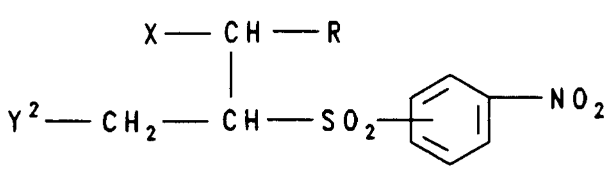
(17)

in welcher $Y^2$, R und X die obengenannten Bedeutungen besitzen, können zu einer erfindungsgemäßen

Anilinverbindung der allgemeinen Formel $D^1$-$NH_2$ obiger Definition reduziert werden, wie beispielsweise durch katalytische Reduktion mittels Wasserstoff in Gegenwart eines üblichen Edelmetallkatalysators oder in saurem, wäßrig-organischem Medium mittels unedler Metalle, wie Eisen oder Zink, wobei als wäßriges saures Medium bevorzugt wäßrige Salzsäure dient. Bevorzugt erfolgt die Reduktion in wäßrigem, saurem Medium oder in wasserfreien organischen Lösemitteln, wie beispielsweise Eisessig, mittels Palladium/Aktivkohle, bei einer Temperatur zwischen 10 und 100 ° C, bevorzugt zwischen 20 und 50 ° C.

Die Verbindungen der allgemeinen Formeln (16) und (17) sind ebenfalls neu. Sie können zusammen mit den Anilinverbindungen der allgemeinen Formel $D^1$-$NH_2$ unter der allgemeinen Formel (18)

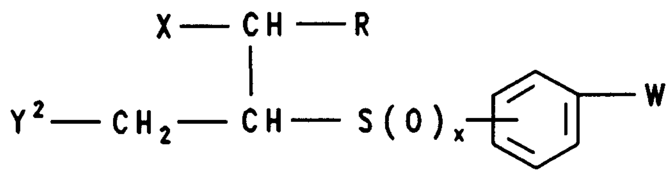

(18)

in welcher $Y^2$, X und R die obengenannten Bedeutungen haben, x für die Zahl Null oder 2 steht und W die Nitro- oder Aminogruppe ist, zusammengefaßt werden.

Die Ausgangsverbindungen der allgemeinen Formel (16) lassen sich herstellen, indem man ein Nitrobenzol-sulfenylhalogenid, vorzugsweise als Sulfenylchlorid, an eine Verbindung der allgemeinen Formel (19)

$Y^2$—$CH_2$—CH = CH—R (19)

in welcher $Y^2$ und R die obengenannten Bedeutungen haben, anlagert. Die Umsetzung erfolgt wie beispielsweise in J. Org. Chem. 49, 1314 (1984) und J. Chem. Soc. 1968, 1339, beschrieben. Insbesondere erfolgt die erfindungsgemäße Umsetzung in inerten organischen Lösemitteln, wie beispielsweise Dichlormethan, Tetrachlorkohlenstoff, Chlorbenzol oder den Dichlorbenzolen, bei einer Temperatur zwischen -50 ° C und 0 ° C, bevorzugt zwischen -40 ° C und -25 ° C.

Die Nitrophenyl-sulfenylhalogenid-Ausgangsverbindungen selbst kann man analog bekannten Verfahrensweisen (s. bspw. Liebigs Ann. 400, 2 (1913)) herstellen, indem man von einem Nitrobenzol-thiol oder -thiolat oder einem Bis-(nitrophenyl)-disulfid ausgeht und dieses in einem inerten Lösemittel, wie beispielsweise Dichlormethan, Chloroform, Tetrachlorkohlenstoff, Chlorbenzol oder einem Dichlorbenzol oder einem isomeren Dichlorbenzolgemisch, bevorzugt in Dichlormethan, Chloroform, Chlorbenzol oder Dichlorbenzol, bei einer Temperatur zwischen -80 ° C und +20 ° C, bevorzugt zwischen -50 ° C und -20 ° C, mit einem Halogenierungsmittel umsetzt. Solche Halogenierungsmittel sind bevorzugt Chlor, Brom, N-Chlor-succinimid und N-Brom-succinimid.

Die Nitrobenzol-isopropyl-sulfon-Verbindung entsprechend der allgemeinen Formel (17), in welcher $Y^2$ eine der obengenannten Bedeutungen besitzt und bevorzugt ein Halogenatom, wie Brom und insbesondere Chlor, die Cyanogruppe oder eine Alkanoyloxygruppe von 2 bis 5 C-Atomen, wie die Acetyloxygruppe ist, lassen sich auch in einfacher Weise dadurch herstellen, daß man Thiophenol mit Chlor zum Phenylsulfenylchlorid umsetzt und dieses an eine Olefinverbindung der obengenannten und definierten allgemeinen Formel (19) zur Verbindung der allgemeinen Formel (20)

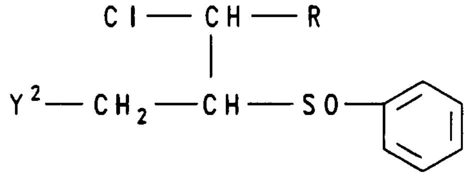

(20)

in welcher R und $Y^2$ eine der obengenannten Bedeutungen besitzen, anlagert, diese Verbindung der Formel (20) sodann mittels Wasserstoffperoxid zur Verbindung der allgemeinen Formel (21)

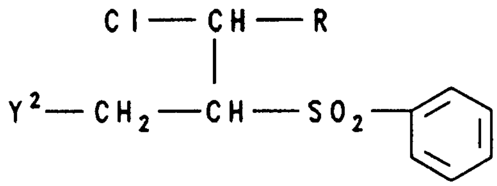

(21)

mit R und $Y^2$ der obengenannten Bedeutung oxidiert und diese sodann analog bekannten Verfahrensweisen der Nitrierung von Benzolverbindungen zu einer metaNitrobenzol-isopropylsulfonyl-Verbindung entsprechend der allgemeinen Formel (17) nitriert. Hierbei erfolgt die Umsetzung des Thiophenols mit Chlor bei einer Temperatur zwischen -20 °C und +20 °C, bevorzugt zwischen -10 °C und +10 °C, in einem gegenüber den Reaktanten inerten organischen Lösemittel, bevorzugt einem halogensubstituierten Kohlenwasserstoff, wie beispielsweise Dichlormethan und Chlorbenzol. Ohne das erhaltene Phenylsulfenylchlorid zu isolieren, kann man es im gleichen Ansatz mit dem Olefin der allgemeinen Formel (19) umsetzen, wobei man auch hier die Reaktion in einem gegenüber den Reaktanten inerten Lösemittel, wie beispielsweise den obengenannten, bei einer Temperatur zwischen -50 °C und 0 °C, bevorzugt zwischen -45 °C und -35 °C, durchführt. Das Lösemittel wird nach beendeter Reaktion abdestilliert und die erhaltene Verbindung der allgemeinen Formel (20) entweder gereinigt oder direkt dem Oxidationsprozeß unterworfen. Dieser erfolgt ebenfalls in einem gegenüber den Reaktanten inerten, mit Wasser mischbaren organischen Lösemittel, wie beispielsweise einer Alkancarbonsäure, bevorzugt einer solchen mit einem Alkylrest von 1 bis 4 C-Atomen, wie insbesondere Essigsäure, bei einer Temperatur zwischen 50 °C und 100 °C, bevorzugt zwischen 60 und 90 °C, mittels Wasserstoffperoxid, das als 10 bis 40 gew.-%ige, bevorzugt 25 bis 35 gew.-%ige, wäßrige Lösung in die Reaktion eingesetzt wird; hierbei wird ein üblicher Oxidationskatalysator, wie beispielsweise ein Alkalimetall-wolframat, mitverwendet. Nach dem Abkühlen des Oxidationsansatzes kann die erhaltene Verbindung der allgemeinen Formel (21), gegebenenfalls nach Zusatz von Wasser, aus dem Ansatz abfiltriert werden. Eine weitere Reinigung ist nicht mehr erforderlich. Diese Sulfonylverbindung der allgemeinen Formel (21) wird sodann mittels einer sogenannten Nitriersäure, einem Gemisch aus konzentrierter Schwefelsäure und Salpetersäure mit bevorzugt einem Salpetersäuregehalt von etwa 30 Gew.-%, bei einer Temperatur zwischen 30 und 70 °C, bevorzugt zwischen 40 und 50 °C, nitriert.

Sowohl die Verbindungen entsprechend der allgemeinen Formel (1) als auch die der allgemeinen Formeln (16), (17) und $D^1$-$NH_2$, in welchen Y bzw. $Y^2$ und gegebenenfalls $Y^1$ die Hydroxygruppe bedeuten, können in üblicher und bekannter Verfahrensweise in Verbindungen überführt werden, in welchen Y und/oder $Y^1$ bzw. $Y^2$ eine andere Bedeutung als die Hydroxygruppe besitzen, so beispielsweise in deren Esterderivate, wie beispielsweise von mehrwertigen anorganischen Säuren oder von aliphatischen und aromatischen Carbon- oder Sulfonsäuren, so beispielsweise in Verbindungen, in welchen Y und/oder $Y^1$ bzw. $Y^2$ für ein Chloratom oder eine Sulfato-, Phosphato-, Acetyloxy- oder Toluylsulfonyloxygruppe stehen.

Hierfür geeignete Veresterungs- und Acylierungsmittel sind beispielsweise die entsprechenden anorganischen oder organischen Säuren oder deren Anhydride, Halogenide oder Amide, wie beispielsweise Schwefelsäure, Schwefeltrioxid enthaltende Schwefelsäure, Chlorsulfonsäure, Amidosulfonsäure, Phosphorsäure, Phosphoroxychlorid, Gemische aus Phosphorsäure und Phosphorpentoxid, Acetanhydrid, Toluolsulfochlorid und Thionylchlorid.

Diejenigen Verbindungen mit einer Vinylsulfonylgruppe können aus deren analogen Esterderivaten, wie beispielsweise solchen, in welchen $Y^2$ die Sulfatogruppe oder ein Chloratom ist, unter Einwirkung eines Alkali hergestellt werden, so in wäßrigem Medium bei einem pH-Wert von 8 bis 10 und einer Temperatur zwischen 20 und 50 °C während 10 bis 20 Minuten. Bei dieser Umsetzung kann unter der Einwirkung des Alkali sowohl die Gruppe $Y^2$ als auch, alternativ hierzu, die Gruppe X unter Mitnahme eines Wasserstoffatoms unter Bildung einer olefinischen Bindung eliminiert werden. Man erhält auf diese Weise aus den Verbindungen (1) bzw. den Ausgangsverbindungen der Formel $D^1$-$NH_2$ jeweils mit dem Rest (2) solche mit einem Rest (2a) oder (2b).

Die erfindungsgemäßen Verbindungen der allgemeinen Formel (1) - im nachfolgenden als Verbindungen (1) bezeichnet - haben faserreaktive Eigenschaften und besitzen sehr wertvolle Farbstoffeigenschaften. Sie können deshalb zum Färben (einschließlich Bedrucken) von hydroxygruppenhaltigen und/oder carbonamidgruppenhaltigen Materialien verwendet werden. Hierzu können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Die Abscheidung und Isolierung der Verbindungen (1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder aber duch Eindampfen der Reaktionslösung selbst, beispielsweise durch Sprühtrocknung. Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung mittels Filtration zu entfernen.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regenerationsprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten, insbesondere auf den genannten Fasermaterialien, nach den für wasserlösliche, faserreaktive Farbstoffe bekannten Anwendungstechniken applizierten und fixieren, so beispielsweise, indem man die Verbindung (1) in gelöster Form auf das Substrat aufbringt oder sie darin einbringt und sie auf diesem oder in diesem durch Hitzeeinwirkung oder durch Einwirkung eines alkalisch wirkenden Mittels oder durch beide Maßnahmen fixiert. Solche Färbe- und Fixierweisen sind in der Literatur zahlreich beschrieben (bspw. in der europäischen Patentanmeldungs-Veröffentlichung Nr. 0 181 585 A2).

Insbesondere heben sich die Verbindungen (1) dadurch vorteilhaft hervor, daß sie in den üblichen Färbeverfahren auch bei Verwendung von Elektrolyten und alkalisch wirkenden Verbindungen in deutlich verringerter Menge als üblich in überraschender Weise Färbungen mit höheren Farbausbeuten als bei Verwendung von üblichen Salzmengen liefern. Denn in der Regel werden beim heutigen Stand der Technik noch große Mengen an Elektrolytzusätzen in den Färbeflotten benötigt, um intensive Färbungen mit den faserreaktiven Farbstoffen zu erhalten. Aus ökologischen Gründen sind derartig hohe Salzmengen, die in der Regel oberhalb von 50 g pro Liter Färbeflotte liegen, unerwünscht. Die Verbindungen (1) ermöglichen es jedoch, Färbeflotten zu verwenden, in welchen die Elektrolytzusätze unterhalb von 40 g pro Liter Färbeflotte, bevorzugt nur zwischen 10 und 35 g pro Liter Färbeflotte, liegen.

Die erfindungsgemäß erhältlichen Färbungen besitzen, insbesondere auf Cellulosefasermaterialien, gute Lichtechtheiten sowohl im trockenen Zustand der Färbung als auch im nassen, beispielsweise mit einer Schweißlösung befeuchteten, Zustand sowie gute Naßechtheiten, wie beispielsweise gute Waschechtheiten bei 60 bis 95 °C, auch in Gegenwart von Perboraten, gute saure und alkalische Walk-, Überfärbe- und Schweißechtheiten, eine hohe Dampfbeständigkeit, gute Alkali-, Säure-, Wasser- und Seewasserechtheiten sowie gute Plissier-, Bügel- und Reibechtheiten. Ebenso besitzen sie eine gute Säurelagerbeständigkeit ("acid fading") beim Lagern von feuchten, noch Essigsäure enthaltendem, gefärbtem Material.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängeangabe bezieht sich auf nm.

Die Messung der $^1$H-NMR-spektroskopischen Daten erfolgte in Dimethylsulfoxid-$d_6$ als Lösemittel und mit Tetramethylsilan als innerem Standard, sofern nicht anders vermerkt.

Beispiel A

Zur Synthese von 1,3-Dichlor-isopropyl-(4'-nitro-phenyl)-sulfid leitet man unter Kühlung neu -10 °C in

eine Suspension von 100 Teilen Bis-(4-nitro-phenyl)-disulfid in 1000 Vol.-Teilen Dichlormethan so lange Chlor ein, bis alles Disulfid in Lösung gegangen ist. Sodann kühlt man den Ansatz auf -40 °C ab und gibt während etwa 30 Minuten langsam 80 Teile Allylchlorid hinzu. Man läßt den Ansatz danach sich auf 20 °C erwärmen, rührt noch etwa 16 Stunden bei dieser Temperatur nach und entfernt sodann flüchtige Bestandteile unter reduziertem Druck.
Der erhaltene Rückstand wird aus Diethylether umkristallisiert. Man erhält etwa 122 bis 123 Teile der Verbindung der Formel

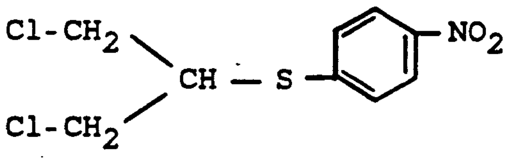

in Form blaßgelber Kristalle mit einem Festpunkt von 62 °C.

| C,H,N-Analyse: | | | |
|---|---|---|---|
| ber.<br>gef. | C 40,6 %,<br>C 40,4 %, | H 3,4 %,<br>H 3,4 %, | N 5,2 % ;<br>N 5,3 % . |

$^1$H-NMR-Analyse: 4,0 ppm (4H;d), 4,22 ppm (1H;quint.), 7,65 ppm (2H;d), 8,18 ppm (2H;d).

Beispiel B

Zur Herstellung von 1,3-Dichlor-isopropyl-(4'-nitro-phenyl)-sulfon löst man 13,3 Teile 1,3-Dichlor-isopropyl-(4'-nitro-phenyl)-sulfid (Beispiel A; in Form des Rohproduktes oder nach Umkristallisation) in 100 Vol.-Teilen Eisessig, gibt 0,05 Teile Natriumwolframat hinzu, erhitzt den Ansatz auf 80 °C und gibt bei dieser Temperatur 11 Vol.-Teile 35 %iges wäßriges Wasserstoffperoxid langsam unter Rühren hinzu. Man rührt danach noch etwa 15 Minuten nach und kühlt den Ansatz auf 0 °C ab. Die ausgefallenen Kristalle werden abgesaugt und aus Ethanol umkristallisiert. Man erhält etwa 11,5 Teile der Verbindung der Formel

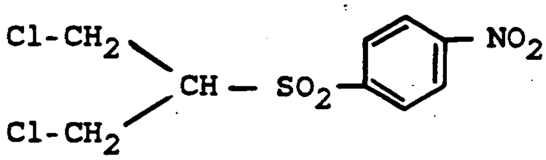

mit einem Festpunkt von 105 °C.

| C,H,N-Analyse: | | | |
|---|---|---|---|
| ber.<br>gef. | C 36,25 %,<br>C 36,3 %, | H 3,04 %,<br>H 3,0 %, | N 4,7 % ;<br>N 4,8 % . |

$^1$H-NMR-Analyse (in $CDCl_3$): 4,07 ppm (4H;m), 4,5 ppm (1H;m), 8,2 ppm (4H;d), 8,45 ppm (4H;d).

Beispiel C

Zur Herstellung von 1,3-Dichlor-isopropyl-(4'-amino-phenyl)-sulfon bereitet man zunächst eine Mischung aus 80 Teilen Zinkpulver, 360 Teilen Wasser, 160 Vol.-Teilen Dioxan und 10 Vol.-Teilen einer konzentrierten wäßrigen Salzsäure. In diese Mischung gibt man unter gutem Rühren bei etwa 20 °C gleichzeitig eine Lösung von 48 Teilen 1,3-Dichlorisopropyl-(4'-nitro-phenyl)-sulfon (Beispiel B) in 320 Vol.-Teilen Dioxan und eine Mischung aus 310 Vol.-Teilen konzentrierter wäßriger Salzsäure, 160 Teilen Wasser und 80 Vol.-Teilen Dioxan langsam hinzu. Man rührt noch eine Zeit weiter, bis das Zink weitgehend aufgebraucht und in Lösung gegangen ist, filtriert den Ansatz vom Niederschlag ab, wäscht diesen mit Dioxan aus und stellt die

vereinigten Filtrate mittels Natriumacetat auf einen pH-Wert von 4. Man rührt das Filtrat noch etwa 12 Stunden bei etwa 20°C nach und saugt den ausgefallenen weißen Niederschlag ab und trocknet ihn. Man erhält etwa 36 Teile einer feinkristallinen Verbindung der Formel

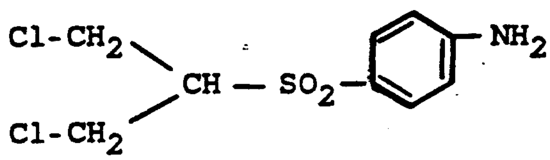

mit einem Festpunkt von 104°C.

| Elementaranalyse: | | | | |
|---|---|---|---|---|
| ber.<br>gef. | C 40,3 %,<br>C 40,8 %, | H 4,1 %,<br>H 4,2 %, | N 5,2 %,<br>N 5,3 %, | Cl 26,4 % ;<br>Cl 25,9 % . |

$^1$H-NMR-Analyse: 3,95 ppm (5H;m), 6,25 ppm (2H;br), 6,65 ppm (2H;d), 7,5 ppm (2H;d).

Beispiel D

Zur Herstellung von 1-Chlor-3-acetyloxy-isopropyl-(4'-nitro-phenyl)-sulfid leitet man in eine Suspension von 92,4 Teilen Bis-(4-nitro-phenyl)-disulfid in 500 Vol.-Teilen Dichlormethan bei -10°C Chlor ein, bis eine klare Lösung entstanden ist. Anschließend leitet man etwa 15 Minuten trockenen Stickstoff ein und gibt sodann bei einer Temperatur von -40°C innerhalb von etwa 15 Minuten langsam 108 Vol.-Teile Allylacetat hinzu. Man rührt noch eine Stunde nach, kühlt sodann die Lösung auf 70°C ab und isoliert den blaßgelben Niederschlag. Es werden 152 Teile eines feinkristallinen Pulvers der Verbindung der Formel

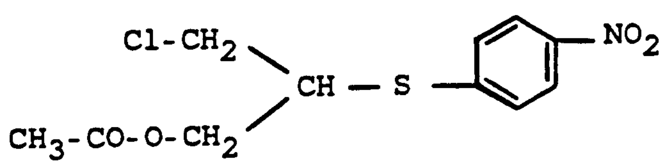

mit einem Festpunkt von 110°C erhalten.

| Elementaranalyse: | | | | |
|---|---|---|---|---|
| ber.<br>gef. | C 45,6 %,<br>C 45,6 %, | H 4,17 %,<br>H 4,2 %, | N 4,8 %,<br>N 4,8 %, | Cl 12,2 % ;<br>Cl 12,4 % . |

$^1$H-NMR-Analyse: 2,05 ppm (3H;s), 3,97 ppm (2H;d), 4,18 ppm (1H;quint.), 4,35 ppm (2H;m), 7,67 ppm (2H;d), 8,18 ppm (2H;d).

Beispiel E

Zur Herstellung von 1-Chlor-3-acetyloxy-isopropyl-(4'-nitro-phenyl)-sulfon versetzt man eine 70°C heiße Lösung von 145 Teilen 1-Chlor-3-acetyloxy-isopropyl-(4'-nitro-phenyl)-sulfid (Beispiel D) in 450 Vol.-Teilen Eisessig, nach Zugabe von 2 Teilen Natriumwolframat, langsam innerhalb von etwa 30 Minuten mit 120 Vol.-Teilen 35 %igem wäßrigem Wasserstoffperoxid. Man rührt noch etwa 15 Minuten nach, kühlt den Ansatz auf etwa 20°C, gibt 100 Teile Wasser hinzu, kühlt die Lösung auf 0°C ab und isoliert den weißen Niederschlag Man erhält 145 Teile eines feinkristallinen Pulvers der Verbindung der Formel

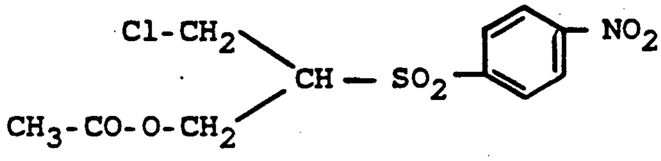

mit einem Festpunkt von 89 ° C.

| Elementaranalyse: | | | | |
|---|---|---|---|---|
| ber. | C 41,1 %, | H 3,7 %, | N 4,3 %, | Cl 11,0 % ; |
| gef. | C 41,4 %, | H 3,6 %, | N 4,1 %, | Cl 11,1 % . |

Beispiel F

Zur Herstellung von 1-Chlor-3-cyano-isopropyl-(4'-nitro-phenyl)-sulfid gibt man zu einer Lösung von 7,6 Teilen 4-Nitrophenyl-sulfenylchlorid langsam bei -20 ° C 4,0 Teile Allylcyanid. Man rührt noch 1 Stunde nach und entfernt sodann flüchtige Bestandteile unter reduziertem Druck. Der zurückbleibende braune Rückstand wird nach einiger Zeit fest. Nach Umkristallisation aus einem Gemisch aus gleichen Teilen Diäthylether und Dichlormethan erhält man 6,7 Teile der Verbindung der Formel

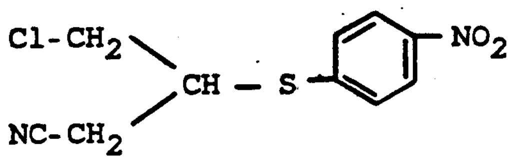

in Form gelblicher Kristalle mit einem Festpunkt von 68 ° C.

| Elementaranalyse: | | | | |
|---|---|---|---|---|
| ber. | C 46,7 %, | H 3,5 %, | N 10,9 %, | Cl 13,8 % ; |
| gef. | C 45,9 %, | H 3,5 %, | N 10,9 %, | Cl 14,6 % . |

$^1$H-NMR-Analyse: 3,1 ppm (2H;m), 3,9 ppm (2H;m), 4,27 ppm (1H;m), 7,75 ppm (2H;d), 8,2 ppm (2H;d).

Beispiel G

Zur Herstellung von 1-Chlor-3-cyano-isopropyl-(4'-nitro-phenyl)-sulfon versetzt man eine 60 ° C warme Lösung von 3,84 Teilen 1-Chlor-3-cyano-isopropyl-(4'-nitro-phenyl)-sulfid (Beispiel F) in 30 Vol.-Teilen Eisessig, nach Zugabe von 0,005 Teilen Natriumwolframat, langsam innerhalb von 30 Minuten mit 7 Vol.-Teilen einer 35 %igen wäßrigen Wasserstoffperoxidlösung. Man rührt noch kurze Zeit nach, kühlt den Ansatz auf -15 ° C ab und isoliert nach einiger Zeit das ausgefallene Produkt.
Es werden 2,6 Teile der Verbindung der Formel

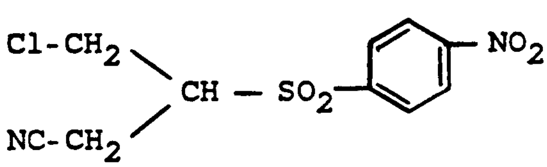

in Form eines weißen Pulvers mit einem Festpunkt von 101 ° C erhalten.

| Elementaranalyse: | | | | |
|---|---|---|---|---|
| ber.<br>gef. | C 41,6 %,<br>C 41,4 %, | H 3,1 %,<br>H 3,0 %, | N 9,7 %,<br>N 9,7 %, | Cl 12,2 % ;<br>Cl 12,4 % . |

$^1$H-NMR-Analyse: 3,2 ppm (2H;m), 4,0 ppm (2H;m), 4,5 ppm (1H;quint.), 8,25 ppm (2H;d), 8,5 ppm (2H;d).

Beispiel H

Zur Herstellung von 1,3-Dichlor-isopropyl-(3'-nitro-phenyl)-sulfid leitet man bei -10°C in eine Lösung aus 55,45 Teilen Bis-(3-nitro-phenyl)-disulfid in 300 Vol.-Teilen Methylenchlorid Chlor ein und rührt den Ansatz bei dieser Temperatur noch einige Zeit nach. Anschließend leitet man während etwa 15 Minuten trockenen Stickstoff durch die Reaktionslösung und gibt anschließend bei -40°C langsam 37 Vol.-Teile Allylchlorid hinzu. Man rührt noch kurze Zeit nach und entfernt sodann flüchtige Bestandteile unter reduziertem Druck. Man erhält ein braunes Öl, das ohne weitere Reinigung zur Herstellung der entsprechenden Sulfonylverbindung (s. Beispiel J) eingesetzt werden kann.

Eine kleine Menge des erhaltenen rohen Sulfids wurde chromatographisch gereinigt. Es zeigte folgende $^1$H-NMR-Analysen-Werte:

4,1 ppm (4H;m), 4,5 ppm (1H;quint.), 7,98 ppm (1H;t), 8,38 ppm (1H;d), 8,61 ppm (1H;d), 8,6 ppm (1H;d).

Beispiel J

Zur Herstellung von 1,3-Dichlor-ispropyl-(3'-nitro-phenyl)-sulfon gibt man langsam zu einer 70°C heißen Lösung der Sulfidverbindung von Beispiel H, nach Zugabe von 0,02 Teilen Natriumwolframat, 80 Vol.-Teile einer 35 %igen wäßrigen Wasserstoffperoxidlösung man rührt den Ansatz noch etwa 90 Minuten bei 70°C nach und setzt anschließend weitere 20 Vol.-Teile der Wasserstoffperoxidlösung hinzu. Nach weiterem kurzen Nachrühren versetzt man den Ansatz mit 100 Teilen Wasser, kühlt ihn auf 0°C ab und isoliert nach einiger Zeit den feinkristallinen Niederschlag.

Es werden 79,5 Teile der Verbindung der Formel

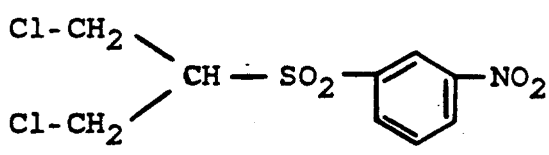

mit einem Festpunkt von 110°C erhalten.

| Elementaranalyse: | | | | | | |
|---|---|---|---|---|---|---|
| ber.<br>gef. | C 36,2 %,<br>C 36,6 %, | H 3,04 %,<br>H 3,1 %, | N 4,7 %,<br>N 4,7 %, | Cl 23,8 %,<br>Cl 23,5 %, | S 10,7 %,<br>S 10,6 %, | O 21,4 % ;<br>O 21,9 % . |

$^1$H-NMR-Analyse: 4,05 ppm (4H;m), 4,5 ppm (1H;t), 7,98 ppm (1H;m), 8,38 ppm (1H;m), 8,61 ppm (1H;m).

Beispiel K

Zur Herstellung von 1-Chlor-3-acetyloxy-isopropyl-(4'-amino-phenyl)-sulfon gibt langsam unter gutem Rühren zu einer Mischung aus 47 Teilen Wasser, 20 Vol.-Teilen Dioxan und 15 Teilen Zinkpulver bei 15 bis 20°C gleichzeitig eine Lösung von 6 Teilen 1-Chlor-3-acetyloxy-isopropyl-(4'-nitro-phenyl)-sulfon (Beispiel C) in 47 Vol.-Teilen Dioxan und eine Mischung aus 47 Vol.-Teilen konzentrierter wäßriger Salzsäure, 20 Teilen Wasser und 14 Vol.-Teilen Dioxan hinzu. Man rührt noch etwa 15 Minuten bei 15 bis 20°C nach, filtriert den Niederschlag ab, stellt das Filtrat mit Natriumacetat auf einen pH-Wert von 4 ein und isoliert nach einiger Zeit das ausgefallene Produkt.

Es werden 5 Teile der Verbindung der Formel

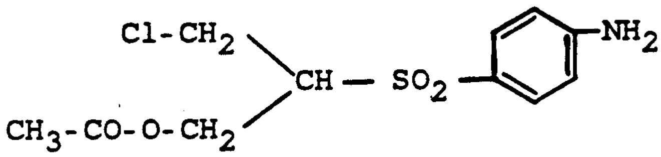

als feines weißes Kristallpulver mit einem Festpunkt von 124 ° C erhalten.

$^1$H-NMR-Analyse: 1,90 ppm (3H;s), 3,82 ppm (2H;m), 3,98 ppm (1H;m), 4,38 ppm (2H;m), 6,2 ppm (2H;br), 6,65 ppm (2H;d), 7,45 ppm (2H;d).

Beispiel L

Zur Herstellung von 1-Brom-3-chlor-isopropyl-(4'-nitro-phenyl)-sulfidleitet man bei -10 ° C in eine Lösung von 31 Teilen Bis-(4-nitro-phenyl)-disulfid in 150 Vol.-Teilen Dichlormethan Chlor ein. Man rührt den Ansatz noch einige Zeit nach und leitet sodann während etwa 15 Minuten trockenen Stickstoff durch und gibt anschließend langsam bei -40 ° C 40 Teile Allylbromid hinzu. Man rührt noch 1 Stunde nach, erwärmt die Lösung auf etwa 20 ° C und entfernt flüchtige Bestandteile unter reduziertem Druck. Man erhält 51 Teile eines braunen kristallinen Rohproduktes, das ohne weitere Reinigung zur Synthese der entsprechenden Sulfonylverbindung (s. Beispiel M) eingesetzt werden kann.

Eine kleine Menge dieses Rohproduktes wurde aus einem Gemisch von gleichen Teilen Diethylether und Dichlormethan umkristallisiert. Es besitzt einen Festpunkt von 60 ° C; folgende Analysenwerte wurden erhalten:

| Elementaranalyse: | | | |
|---|---|---|---|
| ber. | C 34,8 %, | H 2,9 %, | N 4,5 % ; |
| gef. | C 34,9 %, | H 2,9 %, | N 4,6 % . |

$^1$H-NMR-Analyse: 3,9 ppm (2H;m), 4,02 ppm (2H;m), 4,27 ppm (1H;quint.), 7,77 ppm (2H;d), 8,19 ppm (2H;d).

Beispiel M

Zur Herstellung von 1-Brom-3-chlor-isopropyl-(4'-nitro-phenyl)-sulfonversetzt man eine 70 ° C warme Lösung von 75 Teilen 1-Brom-3-chlor-isopropyl-(4'-nitro-phenyl)-sulfid in 100 Vol.-Teilen Eisessig, nach Zugabe von 0,5 Teilen Natriumwolframat, langsam mit 86 Vol.-Teilen einer 35 %igen wäßrigen Wasserstoffperoxidlösung. Man rührt noch kurze Zeit nach,kühlt den Reaktionsansatz auf 0 ° C ab und isoliert nach etwa 2 Stunden das ausgefallene Produkt.

Es werden 66 Teile der Verbindung der Formel

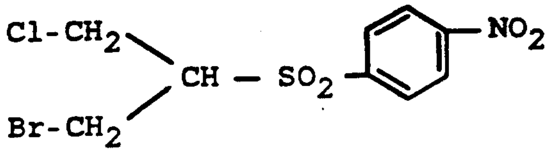

in Form leicht gelblicher Kristalle mit einem Festpunkt von 108 ° C erhalten.

| C,H,N-Analyse: | | | |
|---|---|---|---|
| ber. | C 31,5 %, | H 2,6 %, | N 4,1 % ; |
| gef. | C 30,7 %, | H 2,6 %, | N 3,9 % . |

$^1$H-NMR-Analyse: 3,7 ppm (2H;m), 3,93 ppm (2H;m), 4,12 ppm (1H;d), 8,15 ppm (2H;d), 8,43 ppm

(2H;d).

Beispiel N

Zur Herstellung von 1,3-Dichlor-isopropyl-(4'-aminophenyl)-sulfon hydriert man 29,8 Teile 1,3-Dichlor-isopropyl-(4'-nitrophenyl)-sulfon, gelöst in 300 Vol.-Teilen Eisessig, unter Zusatz von 1,5 Teilen eines Palladium/Aktivkohle-Katalysators (10 % Palladium auf Aktivkohle) bei einem Wasserstoffdruck von 10 bar. Nach beendeter Wasserstoffaufnahme wird der größte Teile der Essigsäure unter vermindertem Druck abdestilliert. Der Rückstand wird mit der 10-fachen Menge Wasser versetzt, abgesaugt und getrocknet. Man erhält die Verbindung der im Beispiel C angegebenen Formel als weißes Kristallpulver (24 Teile).

Beispiel P

Zur Herstellung von 1,3-Dichlor-isopropyl-(3'-aminophenyl)-sulfon hydriert man 25 Teile 1,3-Dichlor-isopropyl-(3'-nitrophenyl)-sulfon (Beispiel J), in 300 Vol.-Teilen Eisessig suspendiert, gemäß den Angaben des Beispiels N. Nach beendeter Wasserstoffaufnahme wird der größte Teil des Eisessigs abdestilliert und der erhaltene Rückstand in die 10-fache Menge Wasser eingerührt. Das reduzierte Produkt fällt zunächst harzig aus, kristallisiert jedoch nach einiger Zeit. Es werden etwa 20,8 Teile eines weißen Pulvers der Verbindung der Formel

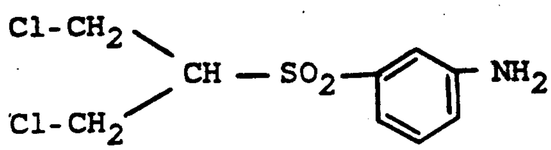

mit eines Festpunkt von 69 ° C erhalten.

| C,H,N-Analyse: | | | | |
|---|---|---|---|---|
| ber.<br>gef. | C 40,3 %,<br>C 40,5 %, | H 4,1 %,<br>H 4,1 %, | N 5,2 %,<br>N 5,2 %, | Cl 26,4 % ;<br>Cl 26,3 % . |

$^1$H-NMR-Analyse: 4,0 ppm (4H;m), 4,07 ppm (1H;m), 5,65 ppm (2H;br), 6,91 ppm (1H;d), 7,00 ppm (1H;d), 7,09 ppm (1H;t), 7,29 ppm (1H;t).

Beispiel 1

Eine Suspension von 26,3 Teilen 1-Amino-8-naphthol-3,6-disulfonsäure in einem Gemisch aus 70 Vol.-Teilen Wasser und 11 Vol.-Teilen einer wäßrigen 37%igen Natronlauge wird zu einer Suspension von 19,4 Teilen Cyanurchlorid in 160 Teilen Eis/Wasser gegeben. Die Umsetzung erfolgt während einer Stunde bei einem pH-Wert zwischen 2 und 2,5, der mittels einer 15%igen wäßrigen Natriumcarbonatlösung eingehalten wird. Anschließend gibt man 17,4 Teile Anilin-3-sulfonsäure hinzu und führt die zweite Kondensationsreaktion bei 20 bis 25 ° C und einem pH-Wert von 6,5 durch.

Getrennt von der Herstellung der Kupplungskomponente suspendiert man 26,6 Teile 4-(1,3-Dichlor-isopropylsulfonyl)-anilin in 40 Vol.-Teilen einer konzentrierten wäßrigen Salzsäure und gibt zunächst einen Teil davon langsam unter Rühren in eine eiskalte Lösung von 1,3 Teilen Natriumnitrit in 200 Teilen Wasser und anschließend, gleichfalls langsam und unter Rühren, den restlichen Teil der Suspension und eine eiskalte Lösung von 7,3 Teilen Natriumnitrit in 70 Teilen Wasser gleichzeitig zu dieser Vorlage. Nach Beendigung der Diazotierungsreaktion wird überschüssiges Nitrit in üblicher Weise mit Amidosulfonsäure zerstört, der Ansatz mittels Kieselgur geklärt und die filtrierte Diazoniumsalzlösung zur Lösung der Kupplungskomponente gegeben. Die Kupplungsreaktion wird bei einem pH-Wert von 6 und einer Temperatur von 20 ° C durchgeführt.

Die erfindungsgemäße Azoverbindung wird mit Natriumchlorid ausgesalzen, abgesaugt und getrocknet. Sie besitzt die Formel

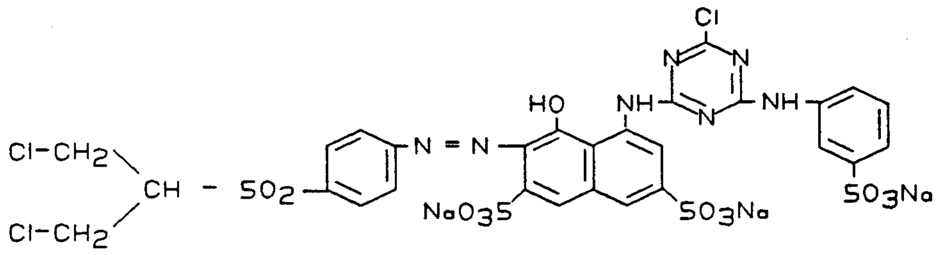

($\lambda_{max}$ = 518 nm)

zeigt sehr gute faserreaktive Farbstoffeigenschaften und liefert bei Anwendung der für faserreaktive Farbstoffe bekannten Applikations- und Fixierverfahren auf den in der Beschreibung benannten Materialien, wie insbesondere cellulosefasermaterialien, beispielsweise Baumwolle, farbstarke blaustichig rote Färbungen und Drucke mit guten Echtheitseigenschaften, von denen insbesondere die Licht- und Naßlichtechtheiten, wie Schweißlichtechtheiten, hervorgehoben werden können.

Beispiel 2

Zur Herstellung der Kupplungskomponente suspendiert man 18,4 Teile Cyanurchlorid in 400 Teilen Eiswasser, gibt 4,3 Teile Cyanamid hinzu und stellt durch allmähliche Zugabe von Natronlauge einen pH-Wert zwischen 8 und 8,5 ein. Nach Beendigung der Umsetzung stellt man den pH-Wert auf 2 bis 2,5 und gibt sodann 29,5 Teile 1-Amino-8-naphthol-3,6-disulfonsäure hinzu, erwärmt den Ansatz auf 35 °C und hält den pH-Bereich von 2 bis 2,5 durch entsprechende Zugabe einer wäßrigen Natriumcarbonatlösung. Nach Beendigung dieser zweiten Kondensationsreaktion erwärmt man den Ansatz auf 80 °C, gibt 17,4 Teile Anilin-3-sulfonsäure hinzu und führt die dritte Kondensationsreaktion bei einem pH-Wert von 5 durch.

Nach Synthese der Kupplungskomponente stellt man die Lösung auf einen pH-Wert von 7 ein und verfährt sodann zur Herstellung der erfindungsgemäßen Azoverbindung gemäß der Verfahrensweise des Beispieles 1 durch Umsetzung mit dem Diazoniumsalz des 4-(1,3-Dichlor-isopropyl-sulfonyl)-anilins. Nach Aussalzen mit Natriumchlorid, Absaugen und Trocknen erhält man die erfindungsgemäße Azoverbindung der Formel

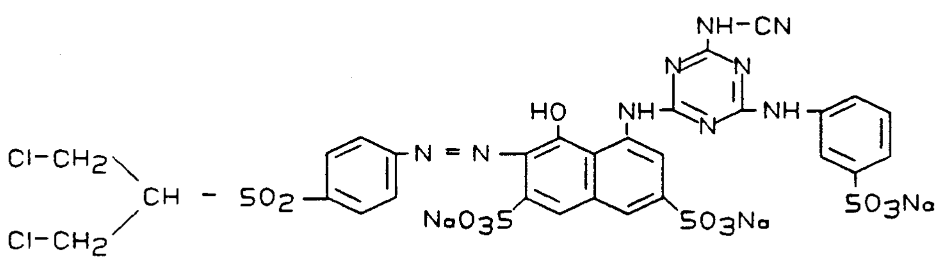

($\lambda_{max}$ = 520 nm)

in Form eines dunkelroten, elektrolythaltigen Pulvers. Die erfindungsgemäße Azoverbindung besitzt sehr gute faserreaktive Farbstoffeigenschaften und liefert beispielsweise auf Cellulosefasermaterialien nach den Färbe- und Druckverfahren für faserreaktive Farbstoffe farbstarke blaustichig rote Färbungen und Drucke mit guten Echtheitseigenschaften, von denen insbesondere die Licht- und Naßlichtechtheiten, wie Schweißlichtechtheiten, hervorgehoben werden können.

Beispiel 3

Zur Herstellung einer Kupplungskomponente setzt man eine Suspension von 26,3 Teilen 1-Amino-8-naphthol-3,6-disulfonsäure in 180 Teilen Wasser bei 0 °C und einem pH-Wert zwischen 3 und 4 mit 13,7 Teilen Trifluortriazin, das langsam zur Aminonaphtholverbindung gegeben wird, um. Anschließend gibt man eine etwa 5 °C kalte Lösung von 17,4 Teilen Anilin-3-sulfonsäure in 200 Teilen Wasser hinzu und führt die zweite Kondensationsreaktion bei einem pH-Wert zwischen 5 und 7 und einer Temperatur von etwa 5 °C durch.

Nach Herstellung dieser Kupplungskomponente erfolgt die Kupplungsreaktion mit dem Diazoniumsalz des Beispieles 1 in der dort angegebenen Verfahrensweise. Die erfindungsgemäße Azoverbindung wird durch Aussalzen isoliert. Sie besitzt die Formel

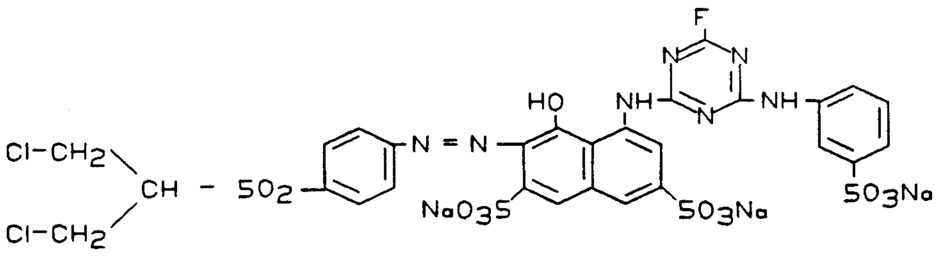

($\lambda_{max}$ = 512 nm)

zeigt mehr gute faserreaktive Farbstoffeigenschaften und liefert beispielsweise auf Cellulosefasermaterialien, wie Baumwolle, nach den für faserreaktive Farbstoffe üblichen Applikations- und Fixierverfahren blaustichig rote Färbungen und Drucke mit guten Echtheitseigenschaften, von denen insbesondere die Licht- und Naßlichtechtheiten, wie Schweißlichtechtheiten, hervorgehoben werden können.

Beispiele bis 4 bis 123

In den nachfolgenden Tabellenbeispiele sind weitere erfindungsgemäße Azoverbindungen mit Hilfe der allgemeinen Formel (A)

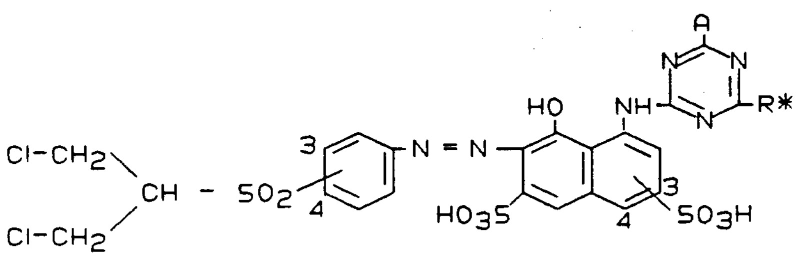

(A)

beschrieben. Sie lassen sich in erfindungsgemäßer Weise, beispielsweise analog einem der obigen Ausführungsbeispiele, aus den aus der allgemeinen Formel in Verbindung mit den Angaben des jeweiligen Tabellenbeispiel ersichtlichen Ausgangsverbindungen (einem Dichlorisopropylsulfonyl-anilin, einer Aminonaphtholdisulfonsäure, einem Halogen-s-triazin, einem Amin entsprechend der allgemeinen Formel H-R* und gegebenenfalls Cyanamid) herstellen. Sie zeigen sehr gute faserreaktive Farbstoffeigenschaften und liefern beispielsweise auf Baumwolle nach den in der Technik üblichen Applikations- und Fixierverfahren farbstarke, echte Färbungen und Drucke mit dem für das jeweilige Tabellenbeispiel angegebenen Farbton.

| Bsp. | Azoverbindung der Formel (A) Sulfonylrest in ... -Stellung | Gruppe $-SO_3H$ in ...-Stellung | Rest A | Rest $R^*$ | Farbton |
|---|---|---|---|---|---|
| 4 | 4- | 3- | Chlor | 4-Sulfo-phenylamino | rot (516) |
| 5 | 3- | 3- | Chlor | 4-Sulfo-phenylamino | rot (508) |
| 6 | 4- | 4- | Chlor | 3-Sulfo-phenylamino | rot (507) |
| 7 | 3- | 4- | Chlor | 3-Sulfo-phenylamino | rot (504) |
| 8 | 4- | 4- | Chlor | 2-Sulfo-phenylamino | rot (507) |
| 9 | 3- | 4- | Chlor | 2-Sulfo-phenylamino | rot (503) |
| 10 | 4- | 3- | Chlor | 2,5-Disulfo-phenylamino | rot (516) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 11 | 3- | 3- | Chlor | 2,5-Disulfo-phenylamino | rot (505) |
| 12 | 4- | 3- | Chlor | 4-Carboxy-phenylamino | rot (518) |
| 13 | 3- | 3- | Chlor | 4-Carboxy-phenylamino | rot (510) |
| 14 | 4- | 4- | Chlor | N-Methyl-N-(ß-sulfo-ethyl)amino | rot (513) |
| 15 | 3- | 4- | Chlor | N-Methyl-N-(ß-sulfo-ethyl)amino | rot (504) |
| 16 | 4- | 4- | Chlor | (Carboxy-methyl)-amino | rot (513) |

Azoverbindung der Formel (A)

| Bsp. | Sulfonylrest in ... -Stellung | Gruppe $-SO_3H$ in ...-Stellung | Rest A | Rest $R^*$ | Farbton |
|---|---|---|---|---|---|
| 17 | 4- | 4- | Chlor | (Carboxy-methyl)-amino | rot (504) |
| 18 | 4- | 3- | Chlor | 4-(ß-Sulfato-ethylsulfonyl)-phenylamino | rot (516) |
| 19 | 3- | 3- | Chlor | 4-(ß-Sulfato-ethylsulfonyl)-phenylamino | rot (514) |
| 20 | 4- | 3- | Chlor | 3-(ß-Sulfato-ethylsulfonyl)-phenylamino | rot (518) |
| 21 | 3- | 3- | Chlor | 3-(ß-Sulfato-ethylsulfonyl)-phenylamino | rot (514) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 22 | 4- | 3- | Chlor | γ-(β'-Sulfatoethyl-sulfonyl)-propylamino | rot (518) |
| 23 | 4- | 3- | Chlor | γ-(β'-Sulfatoethyl-sulfonyl)-propylamino | rot (515) |
| 24 | 4- | 4- | Chlor | 4-Sulfo-phenylamino | rot (507) |
| 25 | 3- | 4- | Chlor | 4-Sulfo-phenylamino | rot (504) |
| 26 | 4- | 3- | Chlor | 3-Sulfo-phenylamino | rot (516) |
| 27 | 3- | 3- | Chlor | 3-Sulfo-phenylamino | rot (507) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 28 | 4- | 3- | Chlor | 2-Sulfo-phenylamino | rot (516) |
| 29 | 3- | 3- | Chlor | 2-Sulfo-phenylamino | rot (506) |
| 30 | 4- | 4- | Chlor | 2,5-Disulfo-phenylamino | rot (506) |
| 31 | 3- | 4- | Chlor | 2,5-Disulfo-phenylamino | rot (503) |
| 32 | 4- | 4- | Chlor | 4-Carboxy-phenylamino | rot (508) |
| 33 | 3- | 4- | Chlor | 4-Carboxy-phenylamino | rot (505) |
| 34 | 4- | 3- | Chlor | N-Methyl-N-(ß-sulfo-ethyl)amino | rot (518) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 35 | 3- | 3- | Chlor | N-Methyl-N-(ß-sulfo-ethyl)amino | rot (514) |
| 36 | 4- | 3- | Chlor | (Carboxy-methyl)-amino | rot (518) |
| 37 | 4- | 3- | Chlor | (Carboxy-methyl)-amino | rot (514) |
| 38 | 4- | 4- | Chlor | 4-(ß-Sulfato-ethylsulfonyl)-phenylamino | rot (507) |
| 39 | 3- | 4- | Chlor | 4-(ß-Sulfato-ethylsulfonyl)-phenylamino | rot (503) |
| 40 | 4- | 4- | Chlor | 3-(ß-Sulfato-ethylsulfonyl)-phenylamino | rot (507) |

Azoverbindung der Formel (A)

| Bsp. | Sulfonylrest in ... -Stellung | Gruppe $SO_3H$ in ...-Stellung | Rest A | Rest $R^*$ | Farbton |
|---|---|---|---|---|---|
| 41 | 3- | 4- | Chlor | 3-(β-Sulfato-ethylsulfonyl)-phenylamino | rot (504) |
| 42 | 4- | 4- | Chlor | γ-(β'-Sulfatoethyl-sulfonyl)-propylamino | rot (508) |
| 43 | 4- | 4- | Chlor | γ-(β'-Sulfatoethyl-sulfonyl)-propylamino | rot (505) |
| 44 | 4- | 4- | Cyanamido | 4-Sulfo-phenylamino | rot (511) |
| 45 | 3- | 4- | Cyanamido | 4-Sulfo-phenylamino | rot (508) |
| 46 | 4- | 3- | Cyanamido | 3-Sulfo-phenylamino | rot (520) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 47 | 3- | 3- | Cyanamido | 3-Sulfo-phenylamino | rot (511) |
| 48 | 4- | 3- | Cyanamido | 2-Sulfo-phenylamino | rot (520) |
| 49 | 3- | 3- | Cyanamido | 2-Sulfo-phenylamino | rot (510) |
| 50 | 4- | 4- | Cyanamido | 2,5-Disulfo-phenylamino | rot (510) |
| 51 | 3- | 4- | Cyanamido | 2,5-Disulfo-phenylamino | rot (507) |
| 52 | 4- | 4- | Cyanamido | 4-Carboxy-phenylamino | rot (512) |
| 53 | 3- | 4- | Cyanamido | 4-Carboxy-phenylamino | rot (509) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 54 | 4- | 3- | Cyanamido | N-Methyl-N-(ß-sulfo-ethyl)amino | rot (522) |
| 55 | 3- | 3- | Cyanamido | N-Methyl-N-(ß-sulfo-ethyl)amino | rot (518) |
| 56 | 4- | 3- | Cyanamido | (Carboxy-methyl)-amino | rot (511) |
| 57 | 4- | 3- | Cyanamido | (Carboxy-methyl)-amino | rot (507) |
| 58 | 4- | 4- | Cyanamido | 4-(ß-Sulfato-ethylsulfonyl)-phenylamino | rot (511) |
| 59 | 3- | 4- | Cyanamido | 4-(ß-Sulfato-ethylsulfonyl)-phenylamino | rot (508) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 60 | 4- | 4- | Cyanamido | 3-(ß-Sulfato-ethylsulfonyl)-phenylamino | rot (512) |
| 61 | 3- | 4- | Cyanamido | 3-(ß-Sulfato-ethylsulfonyl)-phenylamino | rot (507) |
| 62 | 4- | 4- | Cyanamido | γ-(ß'-Sulfatoethyl-sulfonyl)-propylamino | rot (511) |
| 63 | 4- | 4- | Cyanamido | γ-(ß'-Sulfatoethyl-sulfonyl)-propylamino | rot (508) |
| 64 | 4- | 3- | Cyanamido | 4-Sulfo-phenylamino | rot (520) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 65 | 3- | 3- | Cyanamido | 4-Sulfo-phenylamino | rot (512) |
| 66 | 4- | 4- | Cyanamido | 3-Sulfo-phenylamino | rot (511) |
| 67 | 3- | 4- | Cyanamido | 3-Sulfo-phenylamino | rot (508) |
| 68 | 4- | 4- | Cyanamido | 2-Sulfo-phenylamino | rot (513) |
| 69 | 3- | 4- | Cyanamido | 2-Sulfo-phenylamino | rot (507) |
| 70 | 4- | 3- | Cyanamido | 2,5-Disulfo-phenylamino | rot (520) |
| 71 | 3- | 3- | Cyanamido | 2,5-Disulfo-phenylamino | rot (510) |

Azoverbindung der Formel (A)

| Bsp. | Sulfonylrest in ... -Stellung | Gruppe $-SO_3H$ in ...-Stellung | Rest A | Rest $R^*$ | Farbton |
|---|---|---|---|---|---|
| 72 | 4- | 3- | Cyanamido | 4-Carboxy-phenylamino | rot (522) |
| 73 | 3- | 3- | Cyanamido | 4-Carboxy-phenylamino | rot (514) |
| 74 | 4- | 4- | Cyanamido | N-Methyl-N-(ß-sulfo-ethyl)amino | rot (517) |
| 75 | 3- | 4- | Cyanamido | N-Methyl-N-(ß-sulfo-ethyl)amino | rot (508) |
| 76 | 4- | 4- | Cyanamido | (Carboxy-methyl)-amino | rot (517) |
| 77 | 4- | 4- | Cyanamido | (Carboxy-methyl)-amino | rot (508) |

| | Azoverbindung der Formel (A) | | | | |
|---|---|---|---|---|---|
| Bsp. | Sulfonylrest in ... -Stellung | Gruppe $-SO_3H$ in ...-Stellung | Rest A | Rest R* | Farbton |
| 78 | 4- | 3- | Cyanamido | 4-(ß-Sulfato-ethylsulfonyl)-phenylamino | rot (520) |
| 79 | 3- | 3- | Cyanamido | 4-(ß-Sulfato-ethylsulfonyl)-phenylamino | rot (518) |
| 80 | 4- | 3- | Cyanamido | 3-(ß-Sulfato-ethylsulfonyl)-phenylamino | rot (522) |
| 81 | 3- | 3- | Cyanamido | 3-(ß-Sulfato-ethylsulfonyl)-phenylamino | rot (518) |
| 82 | 4- | 3- | Cyanamido | γ-(ß'-Sulfatoethyl-sulfonyl)-propylamino | rot (521) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 83 | 4- | 3- | Cyanamido | γ-(β'-Sulfatoethyl-sulfonyl)-propylamino | rot (519) |
| 84 | 4- | 4- | Fluor | 4-Sulfo-phenylamino | rot (504) |
| 85 | 3- | 4- | Fluor | 4-Sulfo-phenylamino | rot (501) |
| 86 | 4- | 3- | Fluor | 3-Sulfo-phenylamino | rot (512) |
| 87 | 3- | 3- | Fluor | 3-Sulfo-phenylamino | rot (507) |
| 88 | 4- | 3- | Fluor | 2-Sulfo-phenylamino | rot (513) |

| Bsp. | Azoverbindung der Formel (A)<br>Sulfonylrest in ... -Stellung | Gruppe $-SO_3H$ in ...-Stellung | Rest A | Rest R* | Farbton |
|---|---|---|---|---|---|
| 89 | 3- | 3- | Fluor | 2-Sulfo-phenylamino | rot (508) |
| 90 | 4- | 4- | Fluor | 2,5-Disulfo-phenylamino | rot (503) |
| 91 | 3- | 4- | Fluor | 2,5-Disulfo-phenylamino | rot (500) |
| 92 | 4- | 4- | Fluor | 4-Carboxy-phenylamino | rot (505) |
| 93 | 3- | 4- | Fluor | 4-Carboxy-phenylamino | rot (502) |
| 94 | 4- | 3- | Fluor | N-Methyl-N-(ß-sulfo-ethyl)amino | rot (515) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 95 | 3- | 3- | Fluor | N-Methyl-N-(ß-sulfoethyl)amino | rot (511) |
| 96 | 4- | 3- | Fluor | (Carboxymethyl)-amino | rot (515) |
| 97 | 4- | 3- | Fluor | (Carboxymethyl)-amino | rot (512) |
| 98 | 4- | 4- | Fluor | 4-(ß-Sulfatoethylsulfonyl)-phenylamino | rot (505) |
| 99 | 3- | 4- | Fluor | 4-(ß-Sulfatoethylsulfonyl)-phenylamino | rot (499) |
| 100 | 4- | 4- | Fluor | 3-(ß-Sulfatoethylsulfonyl)-phenylamino | rot (506) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 101 | 3- | 4- | Fluor | 3-(ß-Sulfato-ethylsulfonyl)-phenylamino | rot (500) |
| 102 | 4- | 4- | Fluor | γ-(ß'-Sulfatoethyl-sulfonyl)-propylamino | rot (508) |
| 103 | 4- | 4- | Fluor | γ-(ß'-Sulfatoethyl-sulfonyl)-propylamino | rot (504) |
| 104 | 4- | 3- | Fluor | 4-Sulfo-phenylamino | rot (516) |
| 105 | 3- | 3- | Fluor | 4-Sulfo-phenylamino | rot (505) |

| | Azoverbindung der Formel (A) | | | | |
|---|---|---|---|---|---|
| Bsp. | Sulfonylrest in ... -Stellung | Gruppe $-SO_3H$ in ...-Stellung | Rest A | Rest R* | Farbton |
| 106 | 4- | 4- | Fluor | 3-Sulfo-phenylamino | rot (504) |
| 107 | 3- | 4- | Fluor | 3-Sulfo-phenylamino | rot (500) |
| 108 | 4- | 4- | Fluor | 2-Sulfo-phenylamino | rot (504) |
| 109 | 3- | 4- | Fluor | 2-Sulfo-phenylamino | rot (501) |
| 110 | 4- | 3- | Fluor | 2,5-Disulfo-phenylamino | rot (514) |
| 111 | 3- | 3- | Fluor | 2,5-Disulfo-phenylamino | rot (502) |
| 112 | 4- | 3- | Fluor | 4-Carboxy-phenylamino | rot (515) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 113 | 3- | 3- | Fluor | 4-Carboxy-phenylamino | rot (510) |
| 114 | 4- | 4- | Fluor | N-Methyl-N-(ß-sulfo-ethyl)amino | rot (510) |
| 115 | 3- | 4- | Fluor | N-Methyl-N-(ß-sulfo-ethyl)amino | rot (501) |
| 116 | 4- | 4- | Fluor | (Carboxy-methyl)-amino | rot (510) |
| 117 | 4- | 4- | Fluor | (Carboxy-methyl)-amino | rot (502) |
| 118 | 4- | 3- | Fluor | 4-(ß-Sulfato-ethylsulfonyl)-phenylamino | rot (514) |

Azoverbindung der Formel (A)

| Bsp. | Sulfonylrest in ... -Stellung | Gruppe $-SO_3H$ in ...-Stellung | Rest A | Rest R* | Farbton |
|---|---|---|---|---|---|
| 119 | 3- | 3- | Fluor | 4-(ß-Sulfato-ethylsulfonyl)-phenylamino | rot (511) |
| 120 | 4- | 3- | Fluor | 3-(ß-Sulfato-ethylsulfonyl)-phenylamino | rot (515) |
| 121 | 3- | 3- | Fluor | 3-(ß-Sulfato-ethylsulfonyl)-phenylamino | rot (512) |
| 122 | 4- | 3- | Fluor | γ-(β'-Sulfatoethyl-sulfonyl)-propylamino | rot (516) |
| 123 | 4- | 3- | Fluor | γ-(β'-Sulfatoethyl-sulfonyl)-propylamino | rot (513) |

Beispiel 124

Zu einer neutralen Lösung von 26,2 Teilen des Natriumsalzes der 2-Amino-8-naphthol-6-sulfonsäure in etwa 320 Teilen Wasser gibt man langsam bei 0°C 14 Teile Trifluortriazin, wobei man den pH-Wert bei 6 bis 6,5 mittels 10 %iger wäßriger Natronlauge einhält. Kurze Zeit nach Beendigung der Zugabe erwärmt man den Reaktionsansatz auf 20°C, gibt sodann 17,4 Teile Anilin-3-sulfonsäure hinzu und führt die zweite Kondensationsreaktion bei einem pH-Wert zwischen 6 und 6,5 und bei 20 bis 25°C durch. Nach Beendigung dieser Reaktion kühlt man den Ansatz auf 0°C ab und gibt die gemäß Beispiel 1 hergestellte Lösung des Diazonium aus 26,6 Teilen 4-(1,3-Dichlor-isopropyl-sulfonyl)-anilin hinzu und führt die Kupplungsreaktion bei einem pH-Wert zwischen 4 und 4,5 zu Ende.

Die erfindungsgemäße Azoverbindung wird ausgesalzen und in Form eines roten elektrolythaltigen

Farbstoffpulvers isoliert. Sie besitzt die folgende chemische Konstitution:

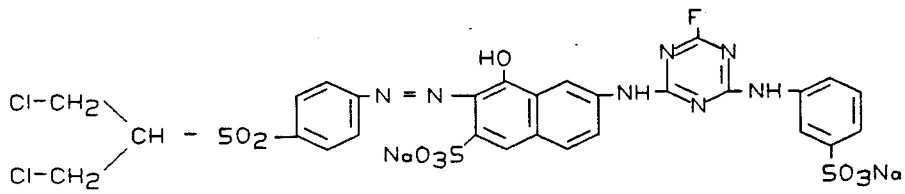

Die erfindungsgemäße Azoverbindung besitzt sehr gute faserreaktive Farbstoffeigenschaften und liefert auf den in der Beschreibung genannten Materialien, wie insbesondere cellulosefasermaterialien, beispielsweise Baumwolle, nach den für faserreaktive Farbstoffe üblichen Applikations- und Fixierverfahren rotstichig orange Färbungen und Drucke mit guten Echtheitseigenschaften, vor denen insbesondere die Licht- und Naßlichtechtheiten, wie Schweißlichtechtheiten, hervorgehoben werden können.

Beispiele bis 125 bis 226

In den nachfolgenden Tabellenbeispiele sind weitere erfindungsgemäße Azoverbindungen mit Hilfe der allgemeinen Formel (B)

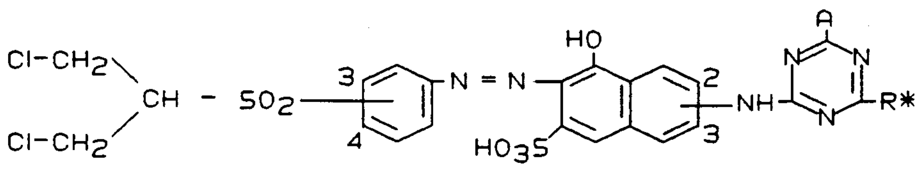

(B)

beschrieben. Sie lassen sich in erfindungsgemäßer Weise, beispielsweise analog einem der obigen Ausführungsbeispiele, aus den aus der allgemeinen Formel in Verbindung mit den Angaben des jeweiligen Tabellenbeispiel ersichtlichen Ausgangsverbindungen (einem Dichlorisopropylsulfonyl-anilin, einer Aminonaphtholdisulfonsäure, einem Halogen-s-triazin, einem Amin entsprechend der allgemeinen Formel H-R* und gegebenenfalls Cyanamid) herstellen. Sie zeigen sehr gute faserreaktive Farbstoffeigenschaften und liefern beispielsweise auf Baumwolle nach den in der Technik üblichen Applikations- und Fixierverfahren farbstarke, echte Färbungen und Drucke mit dem für das jeweilige Tabellenbeispiel angegebenen Farbton.

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 125 | 4- | 2- | Cyanamido | 4-Sulfo-phenylamino | orangerot (502) |
| 126 | 3- | 2- | Cyanamido | 4-Sulfo-phenylamino | orangerot (497) |
| 127 | 4- | 2- | Cyanamido | 3-Sulfo-phenylamino | orangerot (505) |
| 128 | 3- | 2- | Cyanamido | 3-Sulfo-phenylamino | orangerot (501) |
| 129 | 4- | 2- | Cyanamido | 2-Sulfo-phenylamino | orangerot (506) |
| 130 | 3- | 2- | Cyanamido | 2-Sulfo-phenylamino | orangerot (502) |
| 131 | 4- | 2- | Cyanamido | 2,5-Disulfo-phenylamino | orangerot (504) |

| Bsp. | Azoverbindung der Formel (B) | | | | Farbton |
|---|---|---|---|---|---|
| | Sulfonylrest in ...-Stellung | Triazinylamino-gruppe in ...-Stellung | Rest A | Rest R* | |
| 132 | 3- | 2- | Cyanamido | 2,5-Disulfo-phenylamino | orangerot (499) |
| 133 | 4- | 2- | Cyanamido | 4-Carboxy-phenylamino | orangerot (503) |
| 134 | 3- | 2- | Cyanamido | 4-Carboxy-phenylamino | orangerot (498) |
| 135 | 4- | 2- | Cyanamido | N-Methyl-N-(ß-sulfo-ethyl)amino | orangerot (503) |
| 136 | 3- | 2- | Cyanamido | N-Methyl-N-(ß-sulfo-ethyl)amino | orangerot (499) |
| 137 | 4- | 2- | Cyanamido | (Carboxy-methyl)-amino | orangerot (506) |

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 138 | 4- | 2- | Cyanamido | (Carboxy-methyl)-amino | orangerot (502) |
| 139 | 4- | 2- | Cyanamido | 4-(ß-Sulfato-ethylsulfonyl)-phenylamino | orangerot (503) |
| 140 | 3- | 2- | Cyanamido | 4-(ß-Sulfato-ethylsulfonyl)-phenylamino | orangerot (498) |
| 141 | 4- | 2- | Cyanamido | 3-(ß-Sulfato-ethylsulfonyl)-phenylamino | orangerot (502) |
| 142 | 3- | 2- | Cyanamido | 3-(ß-Sulfato-ethylsulfonyl)-phenylamino | orangerot (498) |

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 143 | 4- | 2- | Cyanamido | γ-(β'-Sulfatoethyl-sulfonyl)-propylamino | orangerot (503) |
| 144 | 4- | 3- | Cyanamido | γ-(β'-Sulfatoethyl-sulfonyl)-propylamino | orange (500) |
| 145 | 4- | 3- | Cyanamido | 4-Sulfo-phenylamino | orange (483) |
| 146 | 3- | 3- | Cyanamido | 4-Sulfo-phenylamino | orange (480) |
| 147 | 4- | 3- | Cyanamido | 3-Sulfo-phenylamino | orange (485) |
| 148 | 3- | 3- | Cyanamido | 3-Sulfo-phenylamino | orange (481) |

Azoverbindung der Formel (B)

| Bsp. | Sulfonylrest in ...-Stellung | Triazinylamino-gruppe in ...-Stellung | Rest A | Rest $R^*$ | Farbton |
|---|---|---|---|---|---|
| 149 | 4- | 3- | Cyanamido | 2-Sulfo-phenylamino | orange (486) |
| 150 | 3- | 3- | Cyanamido | 2-Sulfo-phenylamino | orange (481) |
| 151 | 4- | 3- | Cyanamido | 2,5-Disulfo-phenylamino | orange (484) |
| 152 | 3- | 3- | Cyanamido | 2,5-Disulfo-phenylamino | orange (479) |
| 153 | 4- | 3- | Cyanamido | 4-Carboxy-phenylamino | orange (484) |
| 154 | 3- | 3- | Cyanamido | 4-Carboxy-phenylamino | orange (479) |
| 155 | 4- | 3- | Cyanamido | N-Methyl-N-(ß-sulfo-ethyl)amino | orange (483) |

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 156 | 3- | 3- | Cyanamido | N-Methyl-N-(ß-sulfo-ethyl)amino | orange (480) |
| 157 | 4- | 3- | Cyanamido | (Carboxy-methyl)-amino | orange (483) |
| 158 | 4- | 3- | Cyanamido | (Carboxy-methyl)-amino | orange (478) |
| 159 | 4- | 3- | Cyanamido | 4-(ß-Sulfato-ethylsulfonyl)-phenylamino | orange (484) |
| 160 | 3- | 3- | Cyanamido | 4-(ß-Sulfato-ethylsulfonyl)-phenylamino | orange (480) |
| 161 | 4- | 3- | Cyanamido | 3-(ß-Sulfato-ethylsulfonyl)-phenylamino | orange (482) |

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 162 | 3- | 3- | Cyanamido | 3-(ß-Sulfato-ethylsulfonyl)-phenylamino | orange (479) |
| 163 | 4- | 3- | Cyanamido | γ-(ß'-Sulfatoethyl-sulfonyl)-propylamino | orange (485) |
| 164 | 4- | 3- | Cyanamido | γ-(ß'-Sulfatoethyl-sulfonyl)-propylamino | orange (480) |
| 165 | 4- | 3- | Chlor | 4-Sulfo-phenylamino | orange (478) |
| 166 | 3- | 3- | Chlor | 4-Sulfo-phenylamino | orange (475) |

Azoverbindung der Formel (B)

| Bsp. | Sulfonylrest in ...-Stellung | Triazinylaminogruppe in ...-Stellung | Rest A | Rest R* | Farbton |
|---|---|---|---|---|---|
| 167 | 4- | 3- | Chlor | 3-Sulfophenylamino | orange (480) |
| 168 | 3- | 3- | Chlor | 3-Sulfophenylamino | orange (476) |
| 169 | 4- | 3- | Chlor | 2-Sulfophenylamino | orange (481) |
| 170 | 3- | 3- | Chlor | 2-Sulfophenylamino | orange (476) |
| 171 | 4- | 3- | Chlor | 2,5-Disulfophenylamino | orange (479) |
| 172 | 3- | 3- | Chlor | 2,5-Disulfophenylamino | orange (475) |
| 173 | 4- | 3- | Chlor | 4-Carboxyphenylamino | orange (479) |

| | Azoverbindung der Formel (B) | | | | |
|---|---|---|---|---|---|
| Bsp. | Sulfonylrest in ...-Stellung | Triazinylamino-gruppe in ...-Stellung | Rest A | Rest R* | Farbton |
| 174 | 3- | 3- | Chlor | 4-Carboxy-phenylamino | orange (474) |
| 175 | 4- | 3- | Chlor | N-Methyl-N-(ß-sulfo-ethyl)amino | orange (478) |
| 176 | 3- | 3- | Chlor | N-Methyl-N-(ß-sulfo-ethyl)amino | orange (476) |
| 177 | 4- | 3- | Chlor | (Carboxy-methyl)-amino | orange (478) |
| 178 | 4- | 3- | Chlor | (Carboxy-methyl)-amino | orange (477) |
| 179 | 4- | 3- | Chlor | 4-(ß-Sulfato-ethylsulfonyl)-phenylamino | orange (479) |

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 180 | 3- | 3- | Chlor | 4-(ß-Sulfato-ethylsulfonyl)-phenylamino | orange (478) |
| 181 | 4- | 3- | Chlor | 3-(ß-Sulfato-ethylsulfonyl)-phenylamino | orange (478) |
| 182 | 3- | 3- | Chlor | 3-(ß-Sulfato-ethylsulfonyl)-phenylamino | orange (476) |
| 183 | 4- | 3- | Chlor | γ-(ß'-Sulfatoethyl-sulfonyl)-propylamino | orange (480) |
| 184 | 4- | 3- | Chlor | γ-(ß'-Sulfatoethyl-sulfonyl)- | orange (476) |

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 185 | 4- | 2- | Chlor | 4-Sulfo-phenylamino | orangerot (497) |
| 186 | 3- | 2- | Chlor | 4-Sulfo-phenylamino | orangerot (492) |
| 187 | 4- | 2- | Chlor | 3-Sulfo-phenylamino | orangerot (500) |
| 188 | 3- | 2- | Chlor | 3-Sulfo-phenylamino | orangerot (496) |
| 189 | 4- | 2- | Chlor | 2-Sulfo-phenylamino | orangerot (501) |
| 190 | 3- | 2- | Chlor | 2-Sulfo-phenylamino | orangerot (498) |
| 191 | 4- | 2- | Chlor | 2,5-Disulfo-phenylamino | orangerot (499) |

| Bsp. | Sulfonylrest in ...-Stellung | Triazinylamino-gruppe in ...-Stellung | Rest A | Rest R* | Farbton |
|---|---|---|---|---|---|
| | | Azoverbindung der Formel (B) | | | |
| 192 | 3- | 2- | Chlor | 2,5-Disulfo-phenylamino | orangerot (494) |
| 193 | 4- | 2- | Chlor | 4-Carboxy-phenylamino | orangerot (497) |
| 194 | 3- | 2- | Chlor | 4-Carboxy-phenylamino | orangerot (494) |
| 195 | 4- | 2- | Chlor | N-Methyl-N-(ß-sulfo-ethyl)amino | orangerot (498) |
| 196 | 3- | 2- | Chlor | N-Methyl-N-(ß-sulfo-ethyl)amino | orangerot (493) |
| 197 | 4- | 2- | Chlor | (Carboxy-methyl)-amino | orangerot (501) |

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 198 | 4- | 2- | Chlor | (Carboxy-methyl)-amino | orangerot (496) |
| 199 | 4- | 2- | Chlor | 4-(ß-Sulfato-ethylsulfonyl)-phenylamino | orangerot (497) |
| 200 | 3- | 2- | Chlor | 4-(ß-Sulfato-ethylsulfonyl)-phenylamino | orangerot (493) |
| 201 | 4- | 2- | Chlor | 3-(ß-Sulfato-ethylsulfonyl)-phenylamino | orangerot (497) |
| 202 | 3- | 2- | Chlor | 3-(ß-Sulfato-ethylsulfonyl)-phenylamino | orangerot (493) |

| Bsp. | Sulfonylrest in ...-Stellung | Azoverbindung der Formel (B) Triazinylaminogruppe in ...-Stellung | Rest A | Rest $R^*$ | Farbton |
|---|---|---|---|---|---|
| 203 | 4- | 2- | Chlor | γ-(ß'-Sulfatoethylsulfonyl)-propylamino | orangerot (498) |
| 204 | 4- | 2- | Chlor | dito | orangerot (494) |
| 205 | 4- | 3- | Fluor | 4-Sulfophenylamino | orange (473) |
| 206 | 3- | 3- | Fluor | 4-Sulfophenylamino | orange (470) |
| 207 | 4- | 3- | Fluor | 3-Sulfophenylamino | orange (475) |
| 208 | 3- | 3- | Fluor | 3-Sulfophenylamino | orange (471) |

Azoverbindung der Formel (B)

| Bsp. | Sulfonylrest in ...-Stellung | Triazinylaminogruppe in ...-Stellung | Rest A | Rest R* | Farbton |
|---|---|---|---|---|---|
| 209 | 4- | 3- | Fluor | 2-Sulfophenylamino | orange (476) |
| 210 | 3- | 3- | Fluor | 2-Sulfophenylamino | orange (471) |
| 211 | 4- | 3- | Fluor | 2,5-Disulfophenylamino | orange (474) |
| 212 | 3- | 3- | Fluor | dito | orange (471) |
| 213 | 4- | 3- | Fluor | 4-Carboxyphenylamino | orange (474) |
| 214 | 3- | 3- | Fluor | dito | orange (470) |
| 215 | 4- | 3- | Fluor | N-Methyl-N-(ß-sulfoethyl)amino | orange (473) |

Azoverbindung der Formel (B)

| Bsp. | Sulfonylrest in ...-Stellung | Triazinylaminogruppe in ...-Stellung | Rest A | Rest R* | Farbton |
|---|---|---|---|---|---|
| 216 | 3- | 3- | Fluor | N-Methyl-N-(ß-sulfoethyl)amino | orange (470) |
| 217 | 4- | 3- | Fluor | (Carboxymethyl)-amino | orange (474) |
| 218 | 4- | 3- | Fluor | dito | orange (469) |
| 219 | 4- | 3- | Fluor | 4-(ß-Sulfatoethylsulfonyl)-phenylamino | orange (472) |
| 220 | 3- | 3- | Fluor | dito | orange (470) |
| 221 | 4- | 3- | Fluor | 3-(ß-Sulfatoethylsulfonyl)-phenylamino | orange (473) |

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 222 | 3- | 3- | Fluor | 3-(ß-Sulfato-ethylsulfonyl)-phenylamino | orange (470) |
| 223 | 4- | 3- | Fluor | γ-(ß'-Sulfatoethyl-sulfonyl)-propylamino | orange (475) |
| 224 | 4- | 3- | Fluor | γ-(ß'-Sulfatoethyl-sulfonyl)-propylamino | orange (470) |
| 225 | 4- | 2- | Fluor | 4-Sulfo-phenylamino | orangerot (492) |
| 226 | 3- | 2- | Fluor | 4-Sulfo-phenylamino | orangerot (487) |

Azoverbindung der Formel (B)

| Bsp. | Sulfonylrest in ...-Stellung | Triazinylaminogruppe in ...-Stellung | Rest A | Rest R* | Farbton |
|---|---|---|---|---|---|
| 227 | 4- | 2- | Fluor | 3-Sulfo-phenylamino | orangerot (495) |
| 228 | 3- | 2- | Fluor | 3-Sulfo-phenylamino | orangerot (491) |
| 229 | 4- | 2- | Fluor | 2-Sulfo-phenylamino | orangerot (496) |
| 230 | 3- | 2- | Fluor | 2-Sulfo-phenylamino | orangerot (494) |
| 231 | 4- | 2- | Fluor | 2,5-Disulfo-phenylamino | orangerot (494) |
| 232 | 3- | 2- | Fluor | 2,5-Disulfo-phenylamino | orangerot (489) |
| 233 | 4- | 2- | Fluor | 4-Carboxy-phenylamino | orangerot (492) |

Azoverbindung der Formel (B)

| Bsp. | Sulfonylrest in ...-Stellung | Triazinylamino-gruppe in ...-Stellung | Rest A | Rest R* | Farbton |
|---|---|---|---|---|---|
| 234 | 3- | 2- | Fluor | 4-Carboxy-phenylamino | orangerot (485) |
| 235 | 4- | 2- | Fluor | N-Methyl-N-(ß-sulfo-ethyl)amino | orangerot (495) |
| 236 | 3- | 2- | Fluor | dito | orangerot (488) |
| 237 | 4- | 2- | Fluor | (Carboxy-methyl)-amino | orangerot (496) |
| 238 | 4- | 2- | Fluor | (Carboxy-methyl)-amino | orangerot (492) |
| 239 | 4- | 2- | Fluor | 4-(ß-Sulfato-ethylsulfonyl)-phenylamino | orangerot (493) |

Azoverbindung der Formel (B)

| Bsp. | Sulfonylrest in ...-Stellung | Triazinylaminogruppe in ...-Stellung | Rest A | Rest R* | Farbton |
|---|---|---|---|---|---|
| 240 | 3- | 2- | Fluor | 4-(β-Sulfato-ethylsulfonyl)-phenylamino | orangerot (489) |
| 241 | 4- | 2- | Fluor | 3-(β-Sulfato-ethylsulfonyl)-phenylamino | orangerot (492) |
| 242 | 3- | 2- | Fluor | dito | orangerot (488) |
| 243 | 4- | 2- | Fluor | γ-(β'-Sulfatoethyl-sulfonyl)-propylamino | orangerot (493) |
| 244 | 4- | 2- | Fluor | dito | orangerot (489) |

Beispiel 245

Zu einer neutralen Lösung von 19,5 Teilen des Natriumsalzes der Anilin-3-sulfonsäure in etwa 320 Teilen Wasser gibt man langsam bei 0 ° C 14 Teile Trifluortriazin, wobei man einen pH-Wert bei 6 bis 6,5 einhält. Kurze Zeit nach Beendigung der Zugabe erwärmt man den Reaktionsansatz auf 10 ° C und gibt sodann 18,8 Teile 1,3-Diamino-benzol-4-sulfonsäure hinzu und führt die zweite Kondensationsreaktion bei einem pH-Wert zwischen 6 und 6,5 und bei etwa 10 ° C durch. Nach Beendigung dieser Reaktion kühlt man den Ansatz auf 0 ° C ab und gibt die gemäß Beispiel 1 hergestellte Lösung des Diazonium aus 26,6 Teilen 4-(1,3-Dichlor-isopropyl-sulfonyl)-anilin hinzu und führt die Kupplungsreaktion bei einem pH-Wert von etwa

3,5 zu Ende.

Die erfindungsgemäße Azoverbindung wird ausgesalzen und in Form eines elektrolythaltigen Farbstoffpulvers isoliert. Sie besitzt die folgende chemische Konstitution:

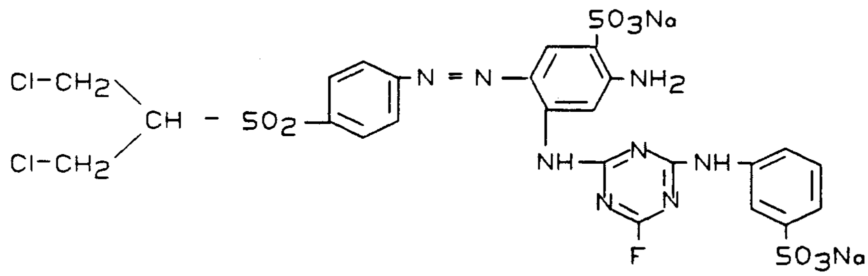

($\lambda_{max}$ = 512 nm)

Die erfindungsgemäße Azoverbindung besitzt sehr gute faserreaktive Farbstoffeigenschaften und liefert auf den in der Beschreibung genannten Materialien, wie insbesondere Cellulosefasermaterialien, beispielsweise Baumwolle, nach den für faserreaktive Farbstoffe üblichen Applikations- und Fixierverfahren goldgelbe Färbungen und Drucke mit guten Echtheitseigenschaften, von denen insbesondere die Licht- und Naßlichtechtheiten, wie Schweißlichtechtheiten, hervorgehoben werden können.

Beispiele bis 246 bis 305

In den nachfolgenden Tabellenbeispiele sind weitere erfindungsgemäße Azoverbindungen mit Hilfe der allgemeinen Formel (C)

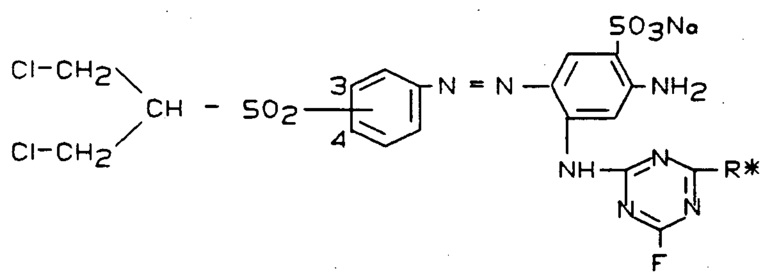

(C)

beschrieben. Sie lassen sich in erfindungsgemäßer Weise, beispielsweise analog einem der obigen Ausführungsbeispiele, aus den aus der allgemeinen Formel in Verbindung mit den Angaben des jeweiligen Tabellenbeispiel ersichtlichen Ausgangsverbindungen (einem Dichlorisopropylsulfonyl-anilin, der Phenylen-(1,3)-diamin-4-sulfonsäure, einem Halogen-s-triazin, einem Amin entsprechend der allgemeinen Formel H-R* und gegebenenfalls Cyanamid) herstellen. Sie zeigen sehr gute faserreaktive Farbstoffeigenschaften und liefern beispielsweise auf Baumwolle nach den in der Technik üblichen Applikations- und Fixierverfahren farbstarke, echte Färbungen und Drucke mit dem für das jeweilige Tabellenbeispiel angegebenen Farbton.

Azoverbindung der Formel (C)

| Bsp. | Sulfonylrest in ... -Stellung | Rest A | Rest R* | Farbton |
|---|---|---|---|---|
| 246 | 4- | Fluor | 4-Sulfo-phenylamino | goldgelb (400) |
| 247 | 3- | Fluor | 4-Sulfo-phenylamino | goldgelb (395) |
| 248 | 4- | Fluor | 3-Sulfo-phenylamino | goldgelb (400) |
| 249 | 3- | Fluor | 3-Sulfo-phenylamino | goldgelb (395) |
| 250 | 4- | Fluor | 2-Sulfo-phenylamino | goldgelb (401) |
| 251 | 3- | Fluor | 2-Sulfo-phenylamino | goldgelb (396) |
| 252 | 4- | Fluor | 2,5-Disulfo-phenylamino | goldgelb (403) |

Azoverbindung der Formel (C)

| Bsp. | Sulfonylrest in ... -Stellung | Rest A | Rest R* | Farbton |
|---|---|---|---|---|
| 253 | 3- | Fluor | 2,5-Disulfo-phenylamino | goldgelb (398) |
| 254 | 4- | Fluor | 4-Carboxy-phenylamino | goldgelb (403) |
| 255 | 3- | Fluor | 4-Carboxy-phenylamino | goldgelb (399) |
| 256 | 4- | Fluor | N-Methyl-N-(ß-sulfo-ethyl)amino | goldgelb (406) |
| 257 | 3- | Fluor | dito | goldgelb (401) |
| 258 | 3- | Fluor | (Carboxy-methyl)-amino | goldgelb (405) |
| 259 | 4- | Fluor | dito | goldgelb (400) |

Azoverbindung der Formel (C)

| Bsp. | Sulfonylrest in ... -Stellung | Rest A | Rest R* | Farbton |
|---|---|---|---|---|
| 260 | 4- | Fluor | 4-(ß-Sulfato-ethylsulfonyl)-phenylamino | goldgelb (400) |
| 261 | 3- | Fluor | 4-(ß-Sulfato-ethylsulfonyl)-phenylamino | goldgelb (395) |
| 262 | 4- | Fluor | 3-(ß-Sulfato-ethylsulfonyl)-phenylamino | goldgelb (403) |
| 263 | 3- | Fluor | 3-(ß-Sulfato-ethylsulfonyl)-phenylamino | goldgelb (398) |
| 264 | 4- | Fluor | γ-(ß'-Sulfatoethyl-sulfonyl)-propylamino | goldgelb (407) |

Azoverbindung der Formel (C)

| Bsp. | Sulfonylrest in ... -Stellung | Rest A | Rest $R^*$ | Farbton |
|---|---|---|---|---|
| 265 | 4- | Fluor | γ-(β'-Sulfatoethyl-sulfonyl)-propylamino | goldgelb (402) |
| 266 | 4- | Chlor | 4-Sulfo-phenylamino | goldgelb (402) |
| 267 | 3- | Chlor | dito | goldgelb (397) |
| 268 | 4- | Chlor | 3-Sulfo-phenylamino | goldgelb (402) |
| 269 | 3- | Chlor | dito | goldgelb (398) |
| 270 | 4- | Chlor | 2-Sulfo-phenylamino | goldgelb (404) |
| 271 | 3- | Chlor | dito | goldgelb (400) |

Azoverbindung der Formel (C)

| Bsp. | Sulfonylrest in ... -Stellung | Rest A | Rest R* | Farbton |
|---|---|---|---|---|
| 272 | 4- | Chlor | 2,5-Disulfo-phenylamino | goldgelb (403) |
| 273 | 3- | Chlor | 2,5-Disulfo-phenylamino | goldgelb (399) |
| 274 | 4- | Chlor | 4-Carboxy-phenylamino | goldgelb (405) |
| 275 | 3- | Chlor | 4-Carboxy-phenylamino | goldgelb (400) |
| 276 | 4- | Chlor | N-Methyl-N-(ß-sulfo-ethyl)amino | goldgelb (408) |
| 277 | 3- | Chlor | N-Methyl-N-(ß-sulfo-ethyl)amino | goldgelb (403) |

Azoverbindung der Formel (C)

| Bsp. | Sulfonylrest in ... -Stellung | Rest A | Rest R* | Farbton |
|---|---|---|---|---|
| 278 | 3- | Chlor | Carboxy-methyl)-amino | goldgelb (407) |
| 279 | 4- | Chlor | (Carboxy-methyl)-amino | goldgelb (403) |
| 280 | 4- | Chlor | 4-(ß-Sulfato-ethylsulfonyl)-phenylamino | goldgelb (401) |
| 281 | 3- | Chlor | 4-(ß-Sulfato-ethylsulfonyl)-phenylamino | goldgelb (397) |
| 282 | 4- | Chlor | 3-(ß-Sulfato-ethylsulfonyl)-phenylamino | goldgelb (403) |
| 283 | 3- | Chlor | dito | goldgelb (398) |

Azoverbindung der Formel (C)

| Bsp. | Sulfonylrest in ... -Stellung | Rest A | Rest R* | Farbton |
|---|---|---|---|---|
| 284 | 4- | Chlor | γ-(β'-Sulfatoethyl-sulfonyl)-propylamino | goldgelb (408) |
| 285 | 4- | Chlor | dito | goldgelb (404) |
| 286 | 4- | Cyanamido | 4-Sulfo-phenylamino | goldgelb (409) |
| 287 | 3- | Cyanamido | 4-Sulfo-phenylamino | goldgelb (405) |
| 288 | 4- | Cyanamdio | 3-Sulfo-phenylamino | goldgelb (410) |
| 289 | 3- | Cyanamido | 3-Sulfo-phenylamino | goldgelb (406) |

Azoverbindung der Formel (C)

| Bsp. | Sulfonylrest in ... -Stellung | Rest A | Rest R* | Farbton |
|---|---|---|---|---|
| 290 | 4- | Cyanamido | 2-Sulfo-phenylamino | goldgelb (408) |
| 291 | 3- | Cyanamido | 2-Sulfo-phenylamino | goldgelb (403) |
| 292 | 4- | Cyanamido | 2,5-Disulfo-phenylamino | goldgelb (408) |
| 293 | 3- | Cyanamido | 2,5-Disulfo-phenylamino | goldgelb (403) |
| 294 | 4- | Cyanamido | 4-Carboxy-phenylamino | goldgelb (409) |
| 295 | 3- | Cyanamido | 4-Carboxy-phenylamino | goldgelb (404) |
| 296 | 4- | Cyanamido | N-Methyl-N-(ß-sulfo-ethyl)amino | goldgelb (410) |

Azoverbindung der Formel (C)

| Bsp. | Sulfonylrest in ... -Stellung | Rest A | Rest R* | Farbton |
|---|---|---|---|---|
| 297 | 3- | Cyanamido | N-Methyl-N-(ß-sulfo-ethyl)amino | goldgelb (406) |
| 298 | 3- | Cyanamido | Carboxy-methyl)-amino | goldgelb (411) |
| 299 | 4- | Cyanamido | (Carboxy-methyl)-amino | goldgelb (408) |
| 300 | 4- | Cyanamido | 4-(ß-Sulfato-ethylsulfonyl)-phenylamino | goldgelb (407) |
| 301 | 3- | Cyanamido | 4-(ß-Sulfato-ethylsulfonyl)-phenylamino | goldgelb (403) |
| 302 | 4- | Cyanamido | 3-(ß-Sulfato-ethylsulfonyl)-phenylamino | goldgelb (408) |

Azoverbindung der Formel (C)

| Bsp. | Sulfonylrest in ... -Stellung | Rest A | Rest $R^*$ | Farbton |
|---|---|---|---|---|
| 303 | 3- | Cyanamido | 3-(β-Sulfato-ethylsulfonyl)-phenylamino | goldgelb (404) |
| 304 | 4- | Cyanamido | γ-(β'-Sulfatoethyl-sulfonyl)-propylamino | goldgelb (412) |
| 305 | 4- | Cyanamido | γ-(β'-Sulfatoethyl-sulfonyl)-propylamino | goldgelb (407) |

## Patentansprüche

**1.** Azoverbindung entsprechend der allgemeinen Formel (1)

$$D^\circ{-}N{=}N{-}K^\circ \qquad (1)$$

in welcher bedeuten:

D° ist ein Rest der allgemeinen Formel (2), (2a) oder (2b)

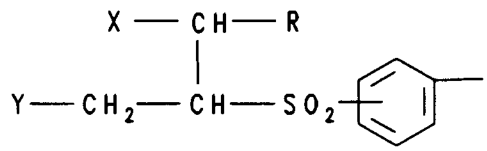

(2)

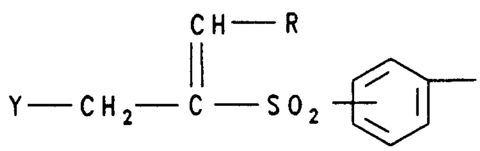

(2a)

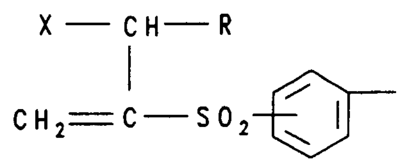

(2b)

in welchen

Y ein Substituent ist, der durch Alkali unter Bildung der Vinylgruppe eliminierbar ist,

X Chlor oder Brom ist und

R Wasserstoff, Alkyl von 1 bis 4 C-Atomen, Phenyl oder Halogen ist;

K° ist ein Rest der allgemeinen Formel (2A) oder (2B)

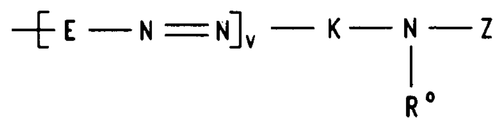

(2A)

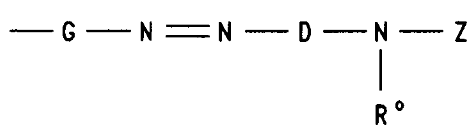

(2B)

in welchen

R° Wasserstoff oder Alkyl von 1 bis 4 C-Atomen ist,

Z ein Rest der allgemeinen Formel (3)

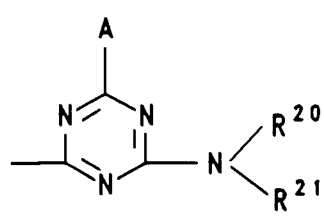

(3)

ist, in welcher

A Halogen oder Cyanamido ist,

$R^{20}$ Wasserstoff oder Alkyl von 1 bis 4 C-Atomen ist oder Alkyl von 1 bis 4 C-Atomen bedeutet, das durch Sulfo, Carboxy, Sulfato, Phosphato, Hydroxy, Methoxy, Ethoxy, Phenyl, Monosulfophenyl oder Disulfophenyl substituiert ist, oder Alkyl von 1 bis 6 C-Atomen ist, das durch eine Gruppe der allgemeinen Formel $-SO_2-CH=CH_2$ oder $-SO_2-CH_2-CH_2-Y^1$ substituiert ist, in welcher $Y^1$ eine der oben für Y genannten Bedeutungen hat oder die Hydroxygruppe ist, oder Alkyl von 2 bis 8 C-Atomen ist, das durch 1 oder 2 Heterogruppen, die aus der Gruppe der Formeln -O-, -NH- und -N(R°)- mit R° der obengenannten Bedeutung ausgewählt sind,

unterbrochen ist und durch eine Gruppe der allgemeinen Formel $-SO_2-CH=CH_2$ oder $-SO_2-CH_2-CH_2-Y^1$ mit $Y^1$ der obengenannten Bedeutung substituiert sein kann, und

$R^{21}$ Wasserstoff oder Alkyl von 1 bis 4 C-Atomen ist oder Alkyl von 1 bis 4 C-Atomen bedeutet, das durch Sulfo, Carboxy, Sulfato, Phosphato, Hydroxy, Methoxy, Ethoxy, Phenyl, Monosulfophenyl oder Disulfophenyl substituiert ist, oder ein Cycloalkylen von 5 oder 6 C-Atomen ist, das durch 1, 2 oder 3 Methylgruppen substituiert sein kann, oder ein Phenylrest ist, der durch Substituenten aus der Gruppe Methyl, Ethyl, Methoxy, Ethoxy, Chlor, Sulfo und Carboxy oder durch 1 oder 2 dieser Substituenten und durch 1 oder 2 Gruppen der allgemeinen Formel $-SO_2-CH=CH_2$ und/oder $-SO_2-CH_2-CH_2-Y^1$ mit $Y^1$ der obengenannten Bedeutung oder durch 1 oder 2 Gruppen $-SO_2-CH=CH_2$ und/oder $-SO_2-CH_2-CH_2-Y^1$ substituiert sein kann, oder ein Alkylrest von 1 bis 6 C-Atomen ist, der durch eine Gruppe der Formel $-SO_2-CH=CH_2$ oder $-SO_2-CH_2-CH_2-Y^1$ mit $Y^1$ der obengenannten Bedeutung substituiert ist, oder Alkyl von 2 bis 8 C-Atomen ist, das durch 1 oder 2 Heterogruppen, die aus der Gruppe der Formeln -O- , -NH- und $-N(R^\circ)-$ mit $R^\circ$ der obengenannten Bedeutung ausgewählt sind, unterbrochen ist und durch eine Gruppe der allgemeinen Formel $-SO_2-CH=CH_2$ oder $-SO_2-CH_2-CH_2-Y^1$ mit $Y^1$ der obengenannten Bedeutung substituiert sein kann, oder

$R^{20}$ und $R^{21}$ zusammen mit dem N-Atom einen 5- oder 6-gliedrigen heterocyclischen Rest bilden, der eine oder zwei weitere Heterogruppen enthalten kann,

E ein Rest der allgemeinen Formel (4a), (4b), (4c) oder (4d)

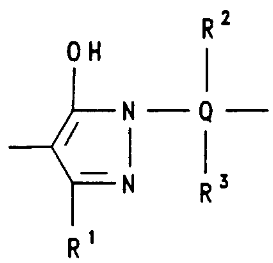

(4a)

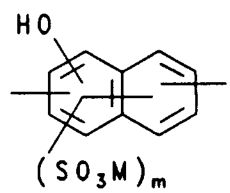

(4b)

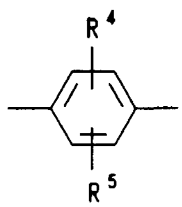

(4c)

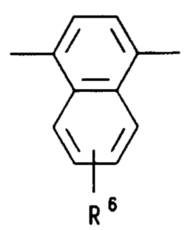

(4d)

ist, in welchen

$R^1$ Wasserstoff, Alkyl von 1 bis 4 C-Atomen, Cyano, Carboxy, Carbalkoxy von 2 bis 5 C-Atomen, Carbamoyl oder Phenyl ist,

Q ein Benzol- oder Naphthalinring ist,

$R^2$ Wasserstoff, Alkyl von 1 bis 4 C-Atomen, Alkoxy von 1 bis 4 C-Atomen, Fluor, Brom, Chlor, Sulfo, Carboxy, Carbalkoxy von 2 bis 5 C-Atomen, Trifluormethyl, Carbamoyl oder $N-(C_1-C_4-Alkyl)$-carbamoyl ist, falls Q einen Benzolring bedeutet, oder

$R^2$ Wasserstoff oder Sulfo ist, falls Q einen Naphthalinring bedeutet,

$R^3$ Wasserstoff, Alkyl von 1 bis 4 C-Atomen, Alkoxy von 1 bis 4 C-Atomen, Chlor oder Sulfo ist, falls Q einen Benzolring bedeutet, oder Wasserstoff oder Sulfo ist, falls Q einen Naphthalinring bedeutet,

$R^4$ Wasserstoff, Alkyl von 1 bis 4 C-Atomen, Alkoxy von 1 bis 4 C-Atomen, Brom, Chlor, Trifluormethyl, Sulfo, Carboxy oder Cyano ist,

$R^5$ Wasserstoff, Alkyl von 1 bis 4 C-Atomen, Alkoxy von 1 bis 4 C-Atomen, Chlor, Amino,

Alkylamino von 1 bis 4 C-Atomen, Alkanoylamino von 2 bis 5 C-Atomen, Benzoylamino, Ureido, N'-Phenylureido, N'-($C_1$-$C_4$-Alkyl)-ureido, Phenylsulfonyl oder Alkylsulfonyl von 1 bis 4 C-Atomen ist,

$R^6$ Wasserstoff oder Sulfo ist,

M Wasserstoff oder ein Alkalimetall ist,

m die Zahl 1 oder 2 bedeutet,

v die Zahl Null oder 1 ist und

-K-N(R°)- der bivalente Rest einer wasserlöslichen Kupplungskomponente ist,

G ein 1-Amino-8-hydroxy-3,6- oder -4,6-disulfo-naphth-2,7-ylen-Rest oder ein 1,3-Phenylenrest ist, der durch eine Hydroxy- oder durch eine Aminogruppe substituiert ist und noch zusätzlich durch Sulfo, Alkyl von 1 bis 4 C-Atomen, Hydroxy und/oder Amino substituiert sein kann, oder ein 1,8-Dihydroxy-3,6- oder -4,6-disulfo-naphth-2,7-ylen-Rest, und

D einen Rest der allgemeinen Formel (6)

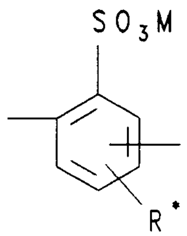

(6)

bedeutet, in welcher

M eine der obengenannten Bedeutungen hat.

**2.** Azoverbindung nach Anspruch 1, dadurch gekennzeichnet, daß R Waserstoff ist.

**3.** Azoverbindung nach Anspruch 1 oder 2, dadurch gekennzeichnet, daß A Fluor ist.

**4.** Azoverbindung nach Anspruch 1 oder 2, dadurch gekennzeichnet, daß A Chlor ist.

**5.** Azoverbindung nach mindestens einem der Ansprüche 1 bis 4, dadurch gekennzeichnet, daß Y Sulfato oder bevorzugt Chlor ist.

**6.** Azoverbindung nach mindestens einem der Ansprüche 1 bis 5, dadurch gekennzeichnet, daß D ein Rest der allgemeinen Formel (2) ist.

**7.** Verfahren zur Herstellung einer Azoverbindung der in Anspruch 1 definierten allgemeinen Formel (1), dadurch gekennzeichnet, daß man im Falle, daß K° einen Rest der allgemeinen Formel (2A) bedeutet, die Diazoniumverbindung eines Amins der allgemeinen Formel (8)

$$D^1-[N=N-E]_v-NH_2 \qquad (8)$$

in welcher E und v die in Anspruch 1 genannten Bedeutungen haben,

$D^1$ ein Rest der allgemeinen Formeln (2c), (2d) oder (2e)

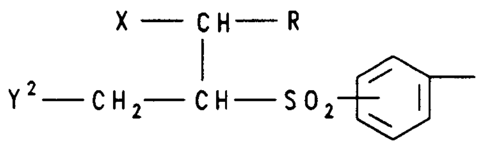

(2c)

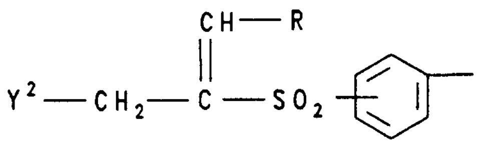

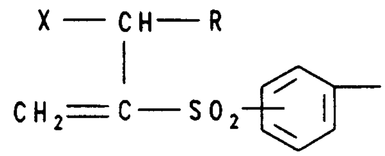

(2d) (2e)

ist, in welchen $Y^2$ ein Substituent ist, der durch Alkali eliminierbar ist, oder die Hydroxygruppe ist, mit einer Verbindung der allgemeinen Formel H-K-N(R°)-Z mit K, R° und Z der in Anspruch 1 genannten Bedeutung kuppelt, oder daß man eine Verbindung der allgemeinen Formel (9)

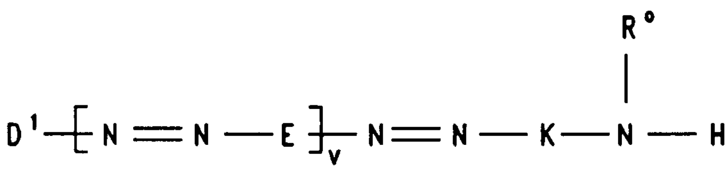

(9)

in welcher $D^1$, E, v, K und R° die in Anspruch 1 genannten Bedeutungen haben, mit einer Verbindung der allgemeinen Formel Hal-Z, in welcher Hal Halogen ist und Z eine der in Anspruch 1 genannten Bedeutungen besitzt, umsetzt, oder daß man eine Verbindung der allgemeinen Formel (10)

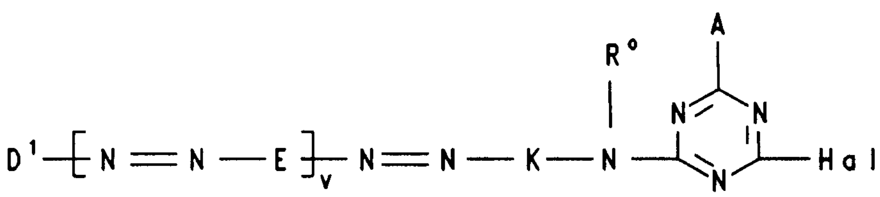

(10)

in welcher $D^1$, A, E, v, K, R° und Hal eine der in Anspruch 1 genannten Bedeutungen besitzen, mit einer Verbindung der allgemeinen Formel $HNR^{20}R^{21}$ mit $R^{20}$ und $R^{21}$ der in Anspruch 1 genannten Bedeutung in äquivalenten Mengen umsetzt,
und daß man im Falle von K° gleich einem Rest der allgemeinen Formel (2B) eine Verbindung der allgemeinen Formel (11)

$D^1$—N=N—$G^1$ (11)

in welcher $D^1$ die in Anspruch 1 genannte Bedeutung besitzt und $G^1$ ein Aminophenyl- oder Hydroxyphenyl-Rest ist, die beide durch Sulfo, Alkyl von 1 bis 4 C-Atomen, Hydroxy und/oder Amino substituiert sein können, oder der 1,8-Dihydroxy-3,6- oder -4,6-disulfo-naphth-2-yl- oder -naphthyl-7-yl-Rest oder der 1-Amino-8-hydroxy-3,6- oder -4,6-disulfo-naphth-2-yl-Rest ist, mit der Diazoniumverbindung eines Amins der allgemeinen Formel (12)

$H_2N$—D—N(R°)-Z (12)

in welcher D, R° und Z eine der in Anspruch 1 genannten Bedeutungen haben, kuppelt, oder daß man eine Verbindung der allgemeinen Formel (13)

$D^1—N=N—G—N=N—D—N(R°)—H$ (13)

ist, in welcher $D^1$, D, G und R° eine der in Anspruch 1 genannten Bedeutungen haben, mit einer Verbindung der allgemeinen Formel Hal-Z mit Hal und Z der obengenannten Bedeutung umsetzt, oder daß man eine Verbindung der allgemeinen Formel (14)

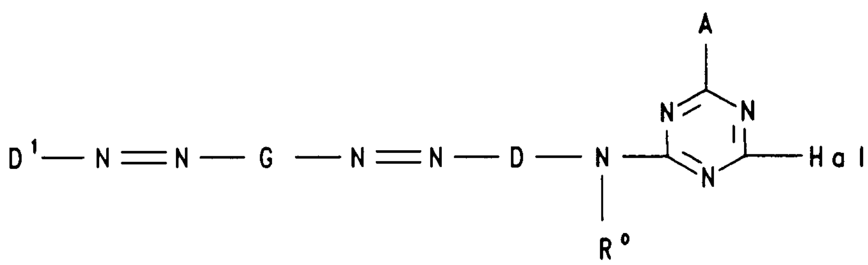

(14)

in welcher $D^1$, D, A, G und R° eine der in Anspruch 1 genannten Bedeutungen haben und Hal wie oben definiert ist, mit einer Verbindung der allgemeinen Formel $HNR^{20}R^{21}$ mit $R^{20}$ und $R^{21}$ der obengenannten Bedeutung in äquivalenten Mengen umsetzt,
wobei in den Fällen der Verwendung einer Verbindung der allgemeinen Formel (2c) oder (2d) mit $Y^2$ gleich einer Hydroxygruppe diese Hydroxygruppe in der gebildeten Azoverbindung in eine Gruppe Y der erfindungsgemäßen Azoverbindung der Formel (1) übergeführt wird.

**8.** Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

**9.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.